(19) Europäisches Patentamt / European Patent Office / Office européen des brevets

(11) **EP 4 513 528 A1**

(12) **EUROPEAN PATENT APPLICATION**

(43) Date of publication:
**26.02.2025 Bulletin 2025/09**

(21) Application number: **24194884.3**

(22) Date of filing: **16.08.2024**

(51) International Patent Classification (IPC):
**H01J 49/06** (2006.01)      **G01N 27/623** (2021.01)

(52) Cooperative Patent Classification (CPC):
**H01J 49/065; G01N 27/623**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **23.08.2023 US 202318454298**

(71) Applicant: **Thermo Finnigan LLC**
**San Jose, CA 95134 (US)**

(72) Inventors:
• **SENKO, Michael W.**
  **San Jose, 95134 (US)**
• **GOODWIN, Michael P.**
  **San Jose, 95134 (US)**
• **SZALWINSKI, Lucas Jeremy**
  **San Jose, 95134 (US)**

(74) Representative: **Boult Wade Tennant LLP**
**Salisbury Square House**
**8 Salisbury Square**
**London EC4Y 8AP (GB)**

(54) **APPARATUS AND METHODS FOR SPATIALLY AND TEMPORALLY SORTING IONS USING RF TRAVELLING WAVES**

(57)      A method of operating an ion optical component comprising a series of electrodes between first and second ends comprises: applying a set of RF voltage waveforms to electrodes of the series that generate a plurality of moving pseudopotential wells that exert forces on ions within the ion optic that urge the ions to migrate from the first end to the second end of the ion optic; and applying, simultaneously with the application of the set of RF voltage waveforms, a set of DC electrical potentials to electrodes of the series that generate a DC field that exerts a force on the ions within the ion optic that urges the ions to migrate from the second end to the first end, whereby there is caused one or more of spatial separation, differential migration or filtering of ions within the ion optical component in accordance with their respective mass-to-charge ($m/z$) ratios.

**FIG. 2A**

**EP 4 513 528 A1**

**Description**

TECHNICAL FIELD

The present application relates to mass spectrometers and mass spectrometry. More particularly, the present application relates to ion optics components, including ion guides, ion traps, and ion separation devices that are employed in mass spectrometers and to methods of use of such ion optics components within mass spectrometers.

BACKGROUND

Mass spectrometry has often been referred to as a "Gold Standard" tool for the identification and analysis of various classes of compounds. In no small measure, the power of mass spectrometry resides in the ability of modern mass spectrometers to separately isolate, store, and subsequently manipulate - via ion fragmentation or ion-ion chemical reaction - specific ion species of interest that are chosen from among the multitude of ion species that are generally produced by ionization of any sample mixture. In many types of mass spectrometers, quadrupole mass filters are often employed to perform the ion isolation function. For example, in a mass spectrometer of the triple-quadrupole type or of the quadrupole-time-of-flight (Q-TOF) type, a mass filter is disposed upstream from a mass analyzer. The mass filter may receive a stream of ions composed of a variety of ion species comprising a variety of mass-to-charge ($m/z$) ratios. To isolate a particular ion species comprising a specific $m/z$, a specific pair of direct-current (DC) and oscillatory radio-frequency (RF) voltages may be applied to rod electrodes of the mass filter. The application of DC and RF voltages of the appropriate magnitude permits transmission, through the mass filter, of only a narrow range of $m/z$ values that encompasses the specific $m/z$ of interest. Under such operation, ions having all other $m/z$ values are ejected from the apparatus and neutralized. The ion species that comprises the specific $m/z$ that is of interest is thus transmitted, without significant contamination from other ions species, through the mass filter to other, downstream mass spectrometer components that may manipulate and analyze ions of the isolated ion species in various ways.

Although mass filters perform an important function, they are nonetheless inefficient in that, at any one time, they cause the elimination of all ions except for those specific ions that are permitted to pass through the apparatus by the choice of filter passband. As a result, typically more than ninety percent of potentially available compositionally relevant information may be wasted by the mass filter at any particular time.

To improve overall analytical efficiency, various types of pre-separation apparatuses have been employed, generally upstream from a mass filter, as a means of providing non-destructive initial coarse separation of ion species. Once separated by the pre-separation apparatus, the various coarsely separated groups of ions may then be separately transferred to a mass filter for narrow-band isolation of ion species of interest. Because of the earlier pre-separation, a lesser proportion of ions will be discarded by the mass filter during each such isolation.

As one example of such a pre-separation method, ion mobility spectrometry (IMS) is often used to separate ionized molecules in the gas phase based on their mobility in a carrier buffer gas. The reader is referred to Kanu et al. (Kanu, Abu B., Prabha Dwivedi, Maggie Tam, Laura Matz, and Herbert H. Hill Jr. "Ion mobility-mass spectrometry." Journal of mass spectrometry 43, no. 1 (2008): 1-22.) for a general review of coupling of ion mobility spectrometers to mass spectrometers. According to another separation method, which is known as trapped ion mobility spectrometry (TIMS), ions are trapped along a non-uniform electric DC field (field gradient) by a counteracting gas flow or along a uniform electric DC field by a counteracting gas flow which has a non-uniform axial velocity profile (gas velocity gradient). The trapped ions are separated in space according to ion mobility and subsequently eluted (released) over time according to their mobility by adjusting one of the gas velocity and the DC electric field. The details of the TIMS technique are described, for example, U.S. Pat. No. 6,630,662 in the name of inventor Loboda; U.S. Pat. No. 7,838,826 B1 in the name of inventor Park; and US Patent No. 11,226,308 in the names of Rather and Michelmann. Additional descriptions are provided in Michelmann et al. (Michelmann, Karsten, Joshua A. Silveira, Mark E. Ridgeway, and Melvin A. Park. "Fundamentals of trapped ion mobility spectrometry." Journal of the American Society for Mass Spectrometry 26, no. 1 (2014): 14-24.) as well as in Silveira et al. (Silveira, Joshua A., Karsten Michelmann, Mark E. Ridgeway, and Melvin A. Park. "Fundamentals of trapped ion mobility spectrometry part II: fluid dynamics." Journal of the American Society for Mass Spectrometry 27, no. 4 (2016): 585-595.)

Both the ion mobility spectrometry technique and the trapped ion mobility spectrometry technique make use of ion guides that are configured to provide an axial DC field along their length. Such axial fields may be provided by proportioning a voltage that is applied between entrance and exit ends of the ion guide among a plurality of electrodes that are disposed between the entrance and exit ends of the ion guide. As one example, the voltage may be proportioned among segments of the rod electrodes of a quadrupole or multipole ion guide apparatus. Alternatively, as discussed in greater detail later in this document, the voltage may be proportioned, for example, among a plurality of mutually parallel electrode plates or among a plurality of thin electrode wires deposited on or otherwise adhered to a substrate plate or wafer.

With the provision of appropriate power supplies and electrical connections, the various rod segments of a segmented quadrupole ion guide, plate electrodes of a stacked plate or stacked ring ion guide, or electrode wires of a printed circuit board may be provided with so-called "travelling-wave" DC voltages (US Pat. No. 6,812,453 in the names of inventors Bateman et al). Generally, in such operation, periodically varying DC voltages are applied to the individual rod segment electrodes, plate electrodes, or wires, the phase of the periodicity being shifted between pairs of electrodes such that electrical potential wells are caused to migrate from an ion guide's ion inlet end to its ion outlet end. Travelling DC voltage waves have been used to control ions in mass spectrometers in accordance with several different configurations. The most common commercially-available ion guides and mass spectrometer collision cells that employ DC travelling waves are the T-Wave™ systems that are provided by Waters Corporation of Milford, Massachusetts, USA. The T-Wave™ systems employ stacked ring ions guides, with radial confinement of ions provided by RF voltages and axial ion propulsion provided by a summed DC travelling wave. Other DC travelling wave configurations known by the acronym "SLIM" (Structures for Lossless Ion Manipulation) have been developed at Pacific Northwest National Laboratory and are described in Tolmachev et al. (Tolmachev, Aleksey V., Ian K. Webb, Yehia M. Ibrahim, Sandilya VB Garimella, Xinyu Zhang, Gordon A. Anderson, and Richard D. Smith. "Characterization of ion dynamics in structures for lossless ion manipulations." Analytical chemistry 86, no. 18 (2014): 9162-9168.) as well as in Ibrahim et al. (Ibrahim, Yehia M., Ahmed M. Hamid, Liulin Deng, Sandilya VB Garimella, Ian K. Webb, Erin S. Baker, and Richard D. Smith. "New frontiers for mass spectrometry based upon structures for lossless ion manipulations." Analyst 142, no. 7 (2017): 1010-1021.). The SLIM ion guides employ similar travelling wave concepts to trap and propel ions, but do so using modified electrode configurations that are amenable to printed circuit board implementation. The T-Wave™ and SLIM travelling wave systems are most commonly used at relatively high pressures (e.g., approximately 1 Torr), where the axial motion of ions is impeded by gas collisions, such that separation is possible based partially on collisional cross section.

Recently, there have been descriptions of ion guides in which travelling waves are implemented not by DC voltages but, instead, by the manipulation of the main RF axial-confinement waveform(s) that are applied to multipole rod segments or to plate electrodes of stacked ring structures. According to these teachings, the various electrodes of an electrode array (e.g., an array of plate electrodes, rod-electrode segments printed-circuit-board electrodes, etc., may be logically grouped into consecutive subsets of electrodes (e.g., sets comprising three or more electrodes each) whereby, within each subset, a differently modulated RF waveform is applied to each electrode of the subset. Examples include RF travelling waves created via amplitude modulation (US Pat. No. 9,799,503 in the names of inventors Williams et al.) and frequency modulation (US Pat. No. 10,692,710 in the names of inventors Prabhakaran et al.).

The present inventors have recognized that, as a result of the $m/z$-dependence of the pseudopotential-derived forces (i.e., travelling pseudopotential wells) that drive ion migration in RF-modulated travelling-wave devices, a variety of ion sorting and/or ion storage devices may be constructed by counteracting the $m/z$-dependent pseudopotential force with an opposing $m/z$-independent force, such as an opposing DC field. Such RF-DC ion sorting devices may be configured to provide initial coarse separation and temporary storage of ion species without reliance upon gas flow. Such novel RF-DC sorting devices, as disclosed herein, may be deployed under both high-vacuum and moderate vacuum conditions and are therefore more versatile than conventional ion sorting devices. Whereas existing DC travelling wave devices requires RF containment that is separate from the DC travelling wave to move ions, the apparatuses and methods described herein utilize RF voltage to both contain ions and move ions.

SUMMARY

Since an RF-derived travelling wave has an m/z-dependent force (i.e., a greater force at lower $m/z$ values), it is possible to oppose this force with a second $m/z$-independent force. For example, a static opposed DC axial electric field may be created by applying a simple DC potential gradient across a plurality of electrodes. The combination of opposed forces may then be used, to advantage, to spatially sort ions within an ion guide or ion trapping device. Such a pair of opposing applied forces will create three different ion behavior conditions, as follows: (1) firstly, in the case of ions having the smallest $m/z$ values, for which the force attributable to the RF travelling wave dominates the DC-field force, the movement will be in the direction of the travelling wave; (2) in the case of ions having the greatest $m/z$ values, for which the DC axial field dominates, the movement will be opposite to the direction of the travelling wave; and (3), finally, for ions having a particular critical $m/z$ value, RF-derived and DC-potential gradient-derived forces will balance such that ions will not move in either direction and will be trapped within a specific region within an ion optical device, where the position of the specific region depends on the particular $m/z$ value and on the applied voltages.

The present inventors have thus recognized that, by coordinated application of an RF field and a static DC field, it is possible, in some embodiments, to configure an ion guide so that low-$m/z$-value ions and high-$m/z$-value ions are caused to migrate in opposite directions, while, at the same time, ions having the critical $m/z$ value are trapped at a trapping location within the ion guide. According to some other embodiments, a gradient may be applied either to the RF field, the DC field or both the RF and DC fields. In such cases, the trapping location will become $m/z$ dependent, thereby both trapping and spatially separating ions based on their respective $m/z$ values. Therefore, in such embodiments, the ions may be spatially sorted along a length of the ion guide, similar to the fashion in which ions in liquid-phase isoelectric focusing move to the point in a pH gradient that makes the ions neutral. The RF field gradient can be created by changing the RF amplitude, *V*, along the length of the device or, more simply, by changing the electrode geometry by varying either axial spacing of the electrodes or by varying the electrode aperture diameters. The DC field gradient can most simply be created by altering the resistors in the divider network used to create the gradient.

The spatial and temporal ion separation and sorting provided by apparatuses described herein do not rely on gas flow. However, optimal operation of such apparatuses may be achieved with ambient gas pressures in the range of 0.01 Torr to approximately 2 Torr. At lower pressures, when an ion is pulled from a pseudopotential well by the opposed DC, there are insufficient gas collisions to allow the ion to settle into an adjacent pseudopotential well. In such low-pressure regimes, ions may be pulled through or across several travelling RF pseudopotential wells by an opposing DC field. Such low-pressure behavior is harmful to the ultimate resolution of the separation. The strength of the ion mobility contribution will be dependent on ion characteristics as well as various controllable parameters, such as gas composition, gas temperature, etc. Unfortunately, this ion mobility contribution is difficult to predict as a result of the time-varying RF field. Accordingly, it may be necessary, under some circumstances, to perform an appropriate calibration of each apparatus' response under various chosen experimental conditions and various classes of ions.

Thus, according to a first aspect of the present teachings, a method of operating an ion guide having first and second ends and comprising a series of electrodes between the first and second ends, the ion guide having, therein, a gas at a pressure that is greater than or equal to 0.01 Torr comprises:

applying a set of radio-frequency (RF) voltage waveforms to electrodes of the series that generate a plurality of moving pseudopotential wells that exert forces on ions within the ion guide that urge the ions to migrate away from the first end and towards the second end of the ion guide; and

applying, simultaneously with the application of the set of RF voltage waveforms, a set of two or more direct-current (DC) electrical potentials, either to electrodes of the series or to a set of auxiliary electrodes, that generate forces on the ions within the ion guide that are independent of mass-to-charge ratio (*m/z*) and that urge the ions to migrate away from the second end and towards the first end of the ion guide,

whereby there is caused one or more of *m/z*-dependent spatial separation, differential migration or filtering of ions within the ion guide.

According to a second aspect of the present teachings, a mass spectrometer system comprises:

an ion source configured to generate a plurality of ions by ionization of a sample, the ions comprising a plurality of mass-to-charge ratio (*m/z*) values;

an ion guide having, therein, a gas at a pressure that is greater than or equal to 0.01 Torr and comprising:

an ion inlet configured to receive a stream of the ions from the ion source;

an ion outlet; and

a series of electrodes disposed between the ion inlet and the ion outlet, the series of electrodes defining an ion occupation volume and an axis of the ion guide between the ion inlet and the ion outlet; and

one or more power supplies electrically coupled to the series of electrodes, the one or more power supplies configured to:

apply a set of radio-frequency (RF) voltage waveforms to the series of electrodes that confine the ions within the ion occupation volume and that generate a plurality of moving pseudopotential wells that exert forces on the ions that urge the ions to migrate either away from the inlet end towards the outlet end or away the outlet end towards the inlet end; and

apply, simultaneously with the application of the set of RF voltage waveforms, a set of direct-current (DC) electrical potentials to the series of electrodes or to two or more auxiliary electrodes that generate forces on the ions within the ion guide that are independent of mass-to-charge ratio (m/z) and that oppose the forces exerted by the moving pseudopotential wells.

BRIEF DESCRIPTION OF THE DRAWINGS

The above noted and various other aspects of the present invention will become apparent from the following description which is given by way of example only and with reference to the accompanying drawings, not necessarily drawn to scale, in which:

FIG. 1A is a schematic cross-sectional depiction of a known stacked-ring ion guide ion transport apparatus;

FIG. 1B is a schematic depiction of an exemplary plate electrode as may be employed in a stacked-ring ion guide ion transport apparatus;

FIG. 1C is a schematic depiction of a known ion manipulation and ion guiding device that may be employed as an ion transport apparatus;

FIG. 1D is a schematic depiction of an electrode configuration of a surface of the known ion manipulation and ion guiding device of FIG. 1C;

FIG. 2A is a schematic cross-sectional depiction of an embodiment of an ion tunnel stacked-ring ion guide in accordance with the present teachings, wherein the directions of ion migration are caused to differ for different mass-to-charge ($m/z$) ratios by application of a static, uniform DC axial field that is in opposition to the downstream migration of pseudopotential wells produced by application of travelling Radio-Frequency (RF) waves;

FIG. 2B is another schematic cross-sectional depiction of the ion tunnel stacked-ring ion guide of FIG. 2A, wherein ions are caused to migrate to and accumulate within various different stability zones in accordance with their respective mass-to-charge ($m/z$) ratios by application of a static, non-uniform DC axial field that is in opposition to the downstream migration of the pseudopotential wells;

FIG. 2C is a schematic depiction of the extraction of ions from the stacked-ring ion guide apparatus of FIG. 2A, in order their respective $m/z$ ratios, by ramping an amplitude (or amplitudes) of RF voltages applied to electrodes of the apparatus;

FIG. 3A is a schematic cross-sectional depiction of a first embodiment of an ion funnel stacked-ring ion guide in accordance with the present teachings, wherein the directions of ion migration are caused to differ for different mass-to-charge ($m/z$) ratios by application of a static, uniform DC axial field that pulls ions towards the downstream, narrow end of the funnel and that is in opposition to the upstream migration of pseudopotential wells produced by application of travelling RF waves;

FIG. 3B is a modified version, in accordance with the present teachings, of the ion manipulation and ion guiding device of FIG. 1C;

FIG. 4A is a set of simulated plots of the equilibrium positions of ions of various $m/z$ ratios within an ion guide ion separator apparatus under application of a gradient of a DC axial field, the direction of which opposes the direction of RF-generated travelling waves;

FIG. 4B is a set of simulated plots of the equilibrium positions of ions of various $m/z$ ratios within an ion guide ion separator apparatus under application of a gradient in the amplitude of travelling-wave-inducing RF waveforms in the presence of an opposing uniform DC axial field;

FIG. 5 is a schematic depiction of a portion of a mass spectrometer apparatus that includes a quadrupole mass filter or other mass spectrometer component arranged in series with an ion optical apparatus that is configured and operated in accordance with the present teachings;

FIG. 6A is a reproduction of the schematic cross-sectional depiction of the apparatus of FIG. 2A and of the ion packets therein, further showing a schematic example of how DC voltages may be apportioned among stacked electrodes to generate a static, uniform DC axial field;

FIG. 6B is a schematic plot of the application, in accordance with some embodiments of the present teachings, of a gradient of the magnitude of the uniform axial electric field, $\vec{E}$, in opposition to the urging of ions by movement of RF-generated travelling pseudo-potential wells (pseudo-waves);

FIG. 6C is a schematic plot of a profile of the magnitudes of DC voltages, $V$, applied to a series of electrodes within an ion guide or ion separator apparatus that may be used to generated the axial electric field profile of FIG. 6B;

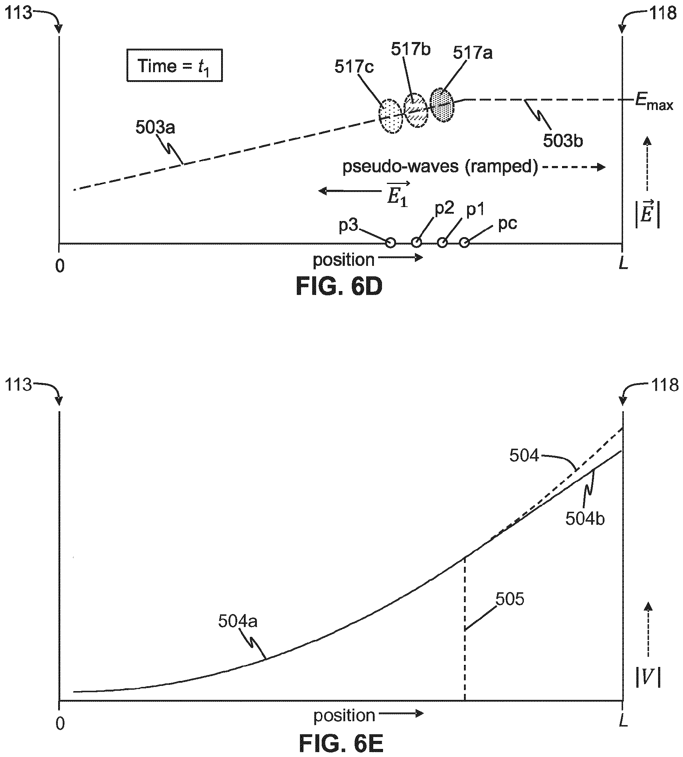

FIG. 6D is a schematic plot of the application, in accordance with some other embodiments of the present teachings, of an axial electric field, $\vec{E}$, that is in opposition to the urging of ions by movement of RF-generated travelling pseudo-waves, wherein the magnitude of the electric field increases along a direction towards an ion outlet in a first portion of an ion guide or ion separator apparatus and is constant in a second portion of the ion guide or ion separator apparatus, the plot also schematically depicting the positions, within the apparatus, of packets of ions having different respective mass-to-charge ratios at a first time, $t_1$, at which an applied amplitude of pseudopotential wells is at a first value;

FIG. 6E is a schematic plot of a profile of the magnitudes of DC voltages, $V$, applied to a series of electrodes within an ion guide or ion separator apparatus that may be used to generate the axial electric field profile of FIG. 6D;

FIG. 6F is a schematic depiction of the positions of the packets of ions of FIG. 6D at a second time, $t_2$, at which an applied amplitude of pseudopotential wells is at a second value that is greater than the first applied amplitude value;

FIG. 6G is a schematic depiction of the positions of the packets of ions of FIG. 6D and FIG. 6F at a third time, $t_3$, at which the applied amplitude of the pseudopotential wells is at a third value that is greater than the second applied amplitude value;

FIG. 6H is a schematic plot of the application, in accordance with some embodiments of the present teachings, of an axial electric field, $\vec{E}$, that is in opposition to the urging of ions by movement of RF-generated travelling pseudo-waves, wherein the magnitude of the electric field increases at a first rate along a direction towards an ion outlet in a first portion of an ion guide or ion separator apparatus and increases at a second, lesser rate in the same direction in a second portion of the ion guide or ion separator apparatus;

FIG. 7A is a schematic plot of a first method of ramping of an RF amplitude that is applied to electrodes of ion guides in accordance with the present teachings;

FIG. 7B is a schematic plot of a second method of ramping of an RF amplitude that is applied to electrodes of ion guides in accordance with the present teachings;

FIG. 8 is a plot of the mass spectral resolution of ions emerging from an ion guide or ion separator apparatus in which a DC electric field profile of the type shown in FIG. 6D is employed while an amplitude of an opposing set of RF-generated pseudo-waves is increased over time in accordance with the present teachings;

FIG. 9 is a plot of the variation, versus mass-to-charge ratio, of mass spectral resolution of ions emerging from an ion guide or ion separator apparatus versus total time allotted for ramping an amplitude of an opposing set of RF-generated pseudo-waves in accordance with the present teachings, wherein a DC electric field profile of the type shown in FIG. 6D is employed;

FIG. 10A is a flow diagram of a first method of operating an ion guide in accordance with the present teachings.

FIG. 10B is a flow diagram of a second method of operating an ion guide in accordance with the present teachings;

FIG. 10C is a flow diagram of a third method of operating an ion guide in accordance with the present teachings;

FIG. 11A is a schematic depiction of an example voltage profile and resultant electric field vector magnitudes as may be applied to an ion guide apparatus in accordance with alternative methods of the present teachings; and

FIG. 11B is a schematic depiction of a second example voltage profile and the resultant electric field vector magnitudes that may be applied to an ion guide apparatus in alternation with the voltage profile of FIG. 7A, in accordance with alternative methods of the present teachings.

DETAILED DESCRIPTION

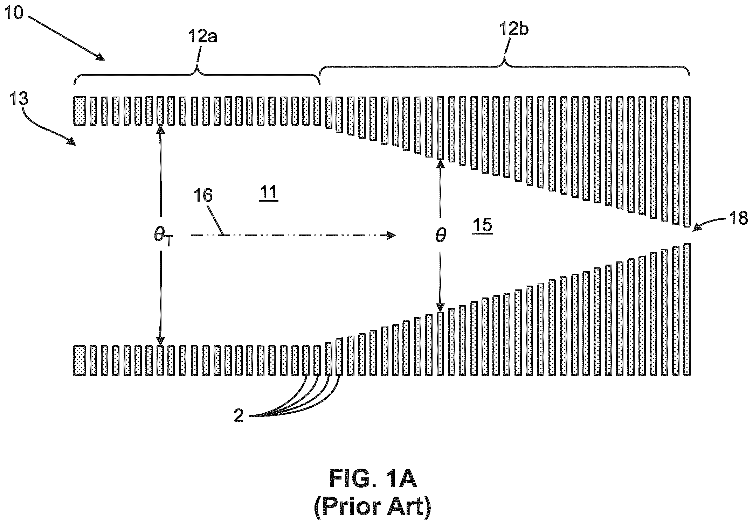

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To fully appreciate the features of the present invention in greater detail, please refer to FIGS. 1A-1D, 2A-2C, 3, 4A, 4B, 5, 6A-6H, 7A, 7B, 8, 9, 10A-10C, 11A and 11B in conjunction with the following description.

In the description of the invention herein, it is understood that a word appearing in the singular encompasses its plural counterpart, and that a word appearing in the plural encompasses its singular counterpart, unless implicitly or explicitly understood or stated otherwise. Furthermore, it is understood that, for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of candidates or alternatives is merely illustrative, not limiting, unless implicitly or explicitly understood or stated otherwise.

Unless otherwise defined, all other technical and scientific terms used herein have the meaning commonly understood by one of ordinary skill in the art to which this invention belongs. In case of conflict, the present specification, including definitions, will control. It will be appreciated that there is an implied "about" prior to any quantitative terms mentioned in the present description, such that slight and insubstantial deviations are within the scope of the present teachings. In addition, the use of "comprise", "comprises", "comprising", "contain", "contains", "containing", "include", "includes", and "including" are not intended to be limiting. As used herein, "a" or "an" also may refer to "at least one" or "one or more." Also, the use of "or" is inclusive, such that the phrase "A or B" is true when "A" is true, "B" is true, or both "A" and "B" are true.

As used herein, the term "DC", when referring to a voltage applied to one or more electrodes of a mass spectrometer component (such as an ion tunnel or ion funnel), does not necessarily imply the imposition of or the existence of an electrical current through those electrodes. The term "DC" is thus used herein to distinguish the referred-to voltage(s) from applied oscillatory voltages that oscillate at radio frequencies and that, themselves, are referred to as "RF" voltages.

As used in this document, the term "static", as applied to a DC electric field (a vector field) or to an RF amplitude, refers to a DC field or an RF amplitude that is maintained essentially unchanging with time during a period of time, possibly with inconsequential variations of not greater than ten percent of an average field strength or an average RF amplitude. The term "uniform", as applied to a DC field, refers to a DC field that is maintained so as to have a magnitude and a direction that do not substantially vary, other than inconsequential statistical variations, across a span encompassing a series of electrodes; for example, across a series of electrodes spanning a length of an ion optical component from an ion entrance end to an ion exit end. Conversely, the terms "gradient" and "non-uniform", as applied to a DC field, refer, respectively, to a spatial variation, spanning a series of electrodes, of at least a magnitude of a DC field and to a DC field that that is caused to exhibit such a variation. It should be noted that a "static" DC field may either be uniform or may have a gradient. The term "uniform", as applied to an RF amplitude, refers to an RF amplitude that is maintained so as to not substantially vary across a span encompassing a series of electrodes. Conversely, the terms "gradient" and "non-uniform", as applied to an RF amplitude, refers to a spatial variation, spanning a series of electrodes, of the applied amplitude.

As used in this document, the terms "dynamic" and "ramped", as applied to either a DC field or an RF amplitude, refer to a DC field or an RF amplitude that is caused to vary with time, in either a monotonically increasing fashion or a monotonically decreasing fashion, over a period of time. The ramping of the magnitude of a DC field that is applied across a series of electrodes requires the ramping of a DC potential that is applied to a subset (i.e., to one or more) of those electrodes. Similarly, the ramping of an RF amplitude of RF waveforms that are applied across a series of electrodes requires the ramping of an RF amplitude that is applied to one or more of those electrodes.

A DC field or RF amplitude that is maintained in a static state over a first time period may, at other times that occur either before or after the time period, be maintained in a dynamic or ramped state and vice versa. Likewise, a DC field or RF amplitude that is maintained in a uniform state over a first time period may, at other times, be maintained in a non-uniform state and vice-versa. As used herein, the terms "urge" and "urges", when used in relation to the effect, upon an ion or ions, of a direction of an applied force, do not necessarily imply that the ion or ions are caused to move in that direction in response to the force, since the direction of movement of any ion at the time of application of a force depends on its initial momentum vector as well as the vector sum of all such applied forces.

As noted above, so-called "stacked-ring ion guides" are frequently employed in mass spectrometry to either guide or otherwise manipulate ions. In this document, the term "stacked-ring ion guides" is used to refer to ion guides that either: comprise a series or stack of ring or ring-like electrodes; comprise a series or stack of plate or platelike electrodes; and/or comprise a series or stack of printed circuit boards that have electrode structures printed on the board surfaces. Stacked-ring ion guides are often used as either so-called "ion tunnels" or "ion funnels". FIG. 1A provides a schematic longitudinal cross-sectional view, of a stacked-ring ion guide apparatus **10** that includes both an ion tunnel section **12a** and an ion funnel section **12b.** It should be noted, however, that many apparatuses that are referred to in the art simply as "ion funnels" have both an ion tunnel section and an ion funnel section as depicted in FIG. 1A.

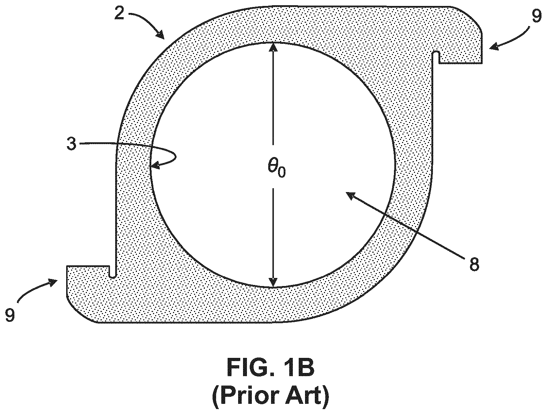

Generally described, the stacked-ring ion guide apparatus **10** comprises a plurality of closely spaced ring electrodes or plate electrodes **2.** A schematic view of a typical individual ring or plate electrode **2** is provided in FIG. 1B. For purposes of clarity, FIG. 1A depicts only a small number of electrodes **2.** It should be kept in mind that, in practice, a typical ion funnel or ion tunnel apparatus may comprise one-hundred or more individual electrodes. Each ring or plate electrode **2** (FIG. 1B) has an aperture **8** that is typically circular in form and that is defined by a ring inner surface **3.** Each ring electrode **2** may comprise one or more tabs, such tabs **9,** for mounting to a support structure (not shown) and possibly providing electrical connection to a power supply (not shown).

Within an ion tunnel, as exemplified by the ion tunnel section **12a,** all apertures of the electrodes of the section have a constant diameter $\theta_T$. In contrast, within an ion funnel section **12b,** the diameters, $\theta$, of the various apertures generally decrease along a direction away from an ion inlet end **13** and towards an ion outlet end **18** of the device. As used in this document, the term "wide end" is used to designate an end of an ion funnel section at which the variable aperture diameter, $\theta$, is greatest and the term "narrow end" is used to designate the opposite end of the ion funnel section, at which the aperture diameter is smallest. In operation, oscillatory radio-frequency (RF) voltages are applied to the electrodes in a prescribed phase relationship to radially confine the ions to the interior of the device. According to the generally-prescribed conventional phase relationship, the phase of the RF voltage waveform of each electrode of the stack is $\pi$ radians (180 degrees) out of phase with the phase of each immediately adjacent electrode. The collection of all of the apertures of all of the electrodes **2** define an ion occupation volume **11,** within which ions generally travel from the ion inlet end **13** to the ion outlet end **18** of the apparatus **10,** as indicated by the arrow on longitudinal axis **16.** In general operation, pseudopotential wells centered about the axis **16** and generated by the applied RF configuration serve to confine ions within the ion occupation volume **11.** The relatively large electrode apertures of the ion inlet end **13** and the ion tunnel portion **12a** of the apparatus are generally employed for the purpose of capturing a dispersed or diffuse cloud of ions. In contrast, the decrease, towards the ion outlet **18,** of electrode apertures of the ion funnel portion **12b** causes the ion cloud to be squeezed into a narrow beam that can be passed into a high-vacuum chamber through a narrow aperture. Migration of ions in the direction from the ion inlet end towards the ion outlet may be facilitated by a flow of gas within which the ions are entrained. Also, the ions may be urged in the same direction by provision of a DC axial field that is generated by differentially providing DC voltages to the electrodes **2.**

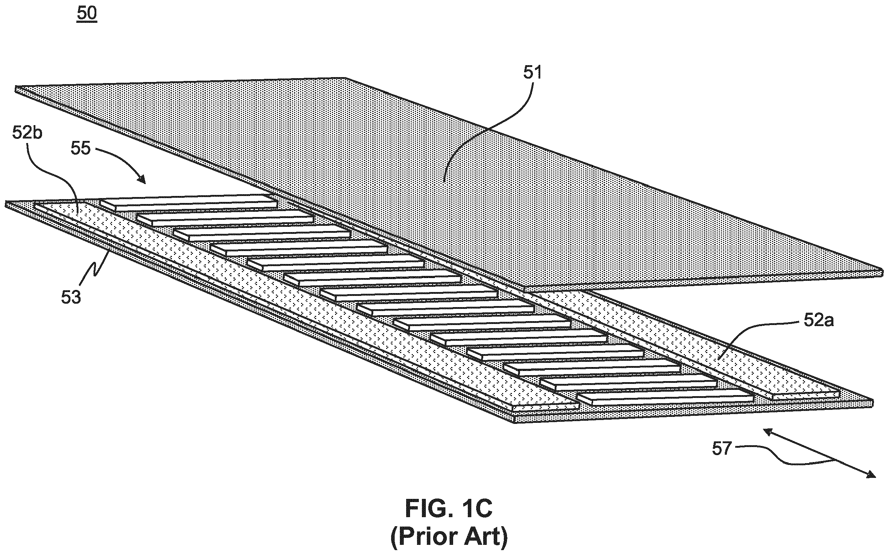

FIG. 1C is a schematic depiction of another known type of ion manipulation and ion guiding device **50,** as taught in the previously mentioned US Pat. No. 10,692,710. As described in that patent, the device **50** comprises two parallel substrate plates or wafers **51** and **53** that are spaced apart from one another, each plate or wafer having a surface upon which a plurality of electrodes is disposed. For example, the plates or wafers **51** and **53** may be the substrates of printed circuit boards. The electrode bearing surfaces may face one another across a gap between the two substrate plates or wafers as shown. A central axis **57** is defined through the device **50.** Each of the electrode-bearing surfaces has an array **55** of inner electrodes and also has outer guard electrodes **52a, 52b.** The outer guard electrodes **52a, 52b** are positioned on either side of the array **55** of inner electrodes. The array **55** of inner electrodes and the outer electrodes **52a, 52b** extend substantially along a length of the electrode-bearing surfaces of the substrate plates or wafers **51, 53.** In operation, ions can be confined within the gap between the electrode-bearing surfaces and guided parallel to the central axis **57** as taught in US Pat. No. 10,692,710.

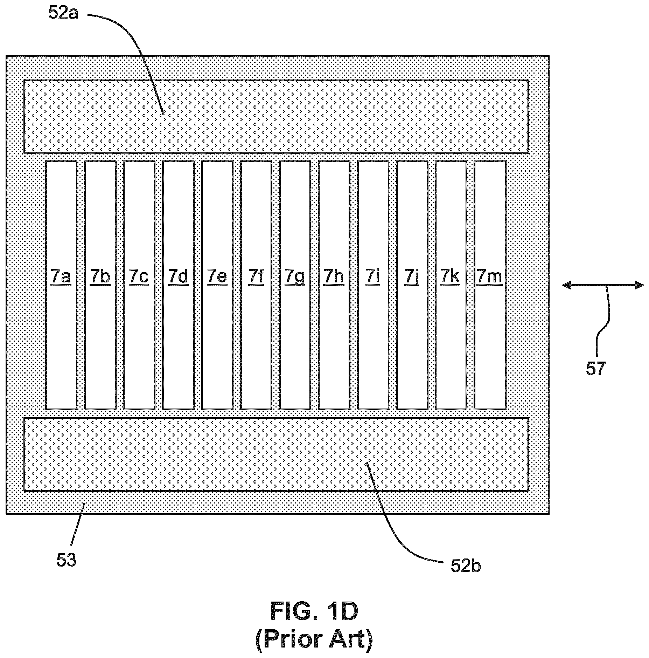

FIG. 1D schematically shows a portion of an electrode-bearing surface of an individual substrate plate or wafer **53** of the known ion manipulation and ion guiding device **50.** In the illustrated example of FIG. 1D, each of the outer guard electrodes **52a, 52b** comprises a single elongated electrode that is elongated parallel to the central axis **57.** The array **55** of electrodes comprises a series of individual electrodes **7a, 7b, 7c, ..., 7m.** Although twelve such individual electrodes are shown, the array **55** can comprise any number of electrodes. A voltage source (not shown) can apply a voltage to each electrode **7a-7m,** individually. As noted above in the Background section of this document, US Pat. No. 10,692,710 further teaches, using the ion manipulation device **50** as an example, that the various electrodes of the inner-electrode array **55** may be logically grouped into consecutive subsets of electrodes (e.g., sets comprising three or more electrodes each). The patent further teaches that, by providing a differently modulated RF waveform to each electrode of each subset, a travelling wave may be generated that tends to urge ions parallel to the central axis **57** through the apparatus **50.**

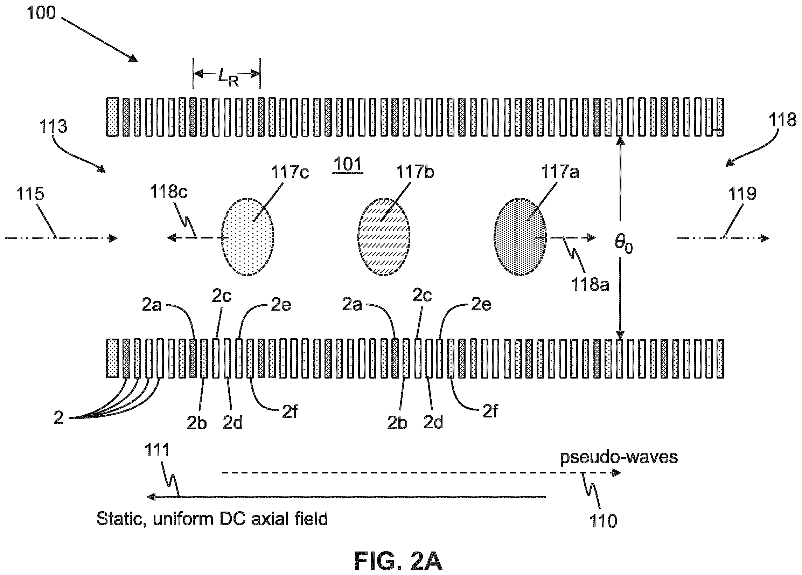

FIG. 2A is a schematic cross-sectional depiction of a first embodiment of an ion tunnel stacked-ring ion guide **100** in accordance with the present teachings. Although the stacked ring ion guide **100** is depicted as comprising only an ion tunnel portion, it may alternatively comprise a combination of any number of ion funnel and ion tunnel portions. In general operation of the apparatus **100,** a stream of ions **115** comprising an unseparated mixture of ion species is delivered to an ion occupation volume **101** of the apparatus through an ion inlet **113.** By means of the operation of the apparatus **100,** the original mixture of ion species may be separated into a plurality of packets - for example, the ion packets **117a, 117b** and **117c** as shown - each of which comprises a different subset of the original set of ion species. These partially-separated packets of ions may then be caused to exit the apparatus as a stream **119** of ion packets through ion outlet **118.**

The physical configuration of electrodes **2** of the apparatus **100** (FIG. 2A) is similar to the physical configuration of the electrodes of the ion tunnel portion **12a** of the stacked ring ion guide **10,** with each electrode having an aperture of diameter $\theta_0$ and the collection of apertures defining the ion occupation volume **101.** Despite this similarity, the apparatus **100** differs from the apparatus **10** (FIG. 1A) in that:

- (a) the electrodes are logically grouped into a stacked sequence of subsets of electrodes, with each of the subsets comprising (in this example) exactly four electrodes;
- (b) RF voltage waveforms applied to the electrodes vary within each subset of electrodes and with time in a fashion that generates a plurality of pseudopotential wells within which ions tend to be concentrated, whereby the pseudopotential wells are caused to migrate in a desired direction parallel to the axis of the apparatus, the set of migrating pseudopotential wells being referred to herein as an RF travelling wave or, equivalently, a "pseudo-wave"; and

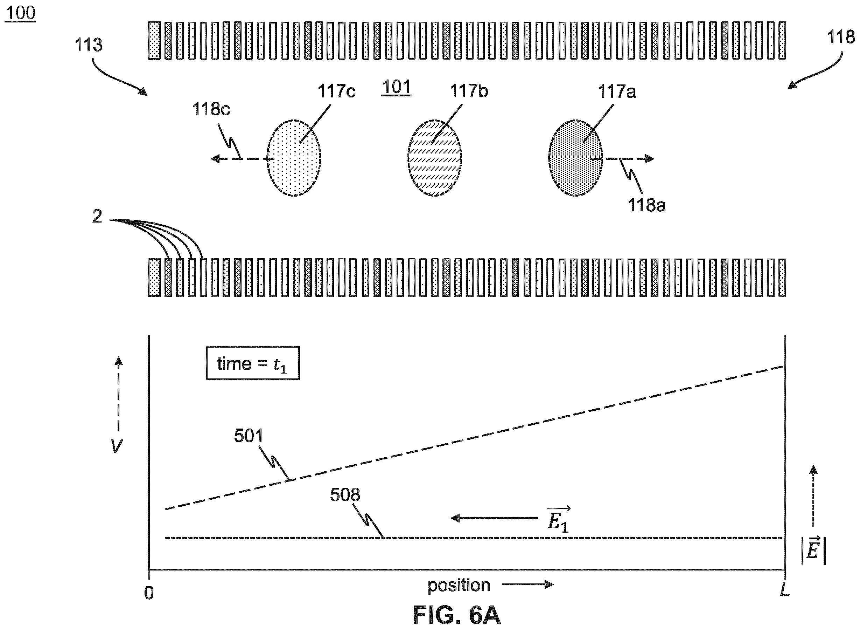

• (c) an axial DC electric field is provided within the ion occupation that tends to urge ions in a direction opposite to the migration direction of the pseudopotential wells. FIG. 6A is a reproduction of the schematic cross-sectional depiction of the apparatus of FIG. 2A and of the ion packets therein, further showing a schematic example of how DC voltages, $V$, may be apportioned among stacked electrodes to generate the static, uniform DC axial field. The axial electric field vector, $\overrightarrow{E_1}$, in the vicinity of the axis of the apparatus is related to the gradient of the applied voltages (voltages shown as plot **501** in FIG. 6A). In the example, the gradient of $V$ is essentially constant across the length of the ion tunnel apparatus **100**. This is reflected in the fact that the magnitude, $|\overrightarrow{E_1}|$, of the electric field (shown as plot **508** in FIG. 6A) in the vicinity of the axis is constant.

Specifically, with regard to the logical grouping of the electrodes into subsets, FIG. 2A depicts two such groups (i.e., subsets), each group comprising a first electrode **2a,** a second electrode **2b,** a third electrode **2c** and a fourth electrode **2d.** Although only two such groups are labeled in FIG. 2A, it is to be understood that, in the illustrated embodiment, the grouping into subsets of four electrodes each pertains to all electrodes **2** of the apparatus, extending from the ion inlet **113** to the ion outlet **118.** According to some alternative embodiments, some portion of the electrodes may not be so organized into groups. Although four electrodes per subset are illustrated, the number of electrodes per subset, $N_e$, is not necessarily limited to four per subset. More generally, $N_e \geq 3$. A repeat distance, $L_R$, along the axis of the apparatus **100** (parallel to the arrows **115** and **119**) is defined as the distance between successive electrodes **2a** (or successive electrodes **2b,** etc.).

Within each subset of electrodes of the apparatus **100,** the four electrodes of the subset differ in that, in operation, each electrode is provided with a respective different RF voltage waveform, as discussed further below. All electrodes **2a** are provided with a first RF voltage waveform that is, in embodiments, identical among all electrodes **2a.** Likewise, all electrode **2b** are provided with a second RF voltage waveform that is, in embodiments, identical among all electrodes **2b.** Likewise, a third voltage waveform is applied to all electrodes **2c** and a fourth voltage waveform is applied to all electrodes **2d.** Generally described, the $N_e$ voltage waveforms are chosen such that a set of migrating pseudopotential wells are generated along the axis of the apparatus (coincident with arrows **115** and **119**), thereby forming a set of "travelling waves" that tend to urge ions along the axis. According to the example shown in FIG. 2A, the voltage waveforms are configured such that the travelling waves urge ions parallel to lines **115, 119** in a direction from the ion inlet **113** towards the ion outlet **118.** However, according to some other embodiments as discussed further herein below, the voltage waveforms may be configured so as to urge ions in the opposite direction.

According to some embodiments of the present teachings, the RF voltage waveforms applied to the electrodes of the apparatus **100** may be selected as described in US Pat. No. 9,799,503. That patent provides an example of a subset of four electrodes of a stacked-ring ion guide, wherein respective RF voltage waveforms are provided to the four electrodes such that a plurality of migrating pseudopotential wells create travelling waves within an ion guide. According to the aforementioned US Pat. No. 9,799,503, the four RF voltage waveforms may be provided in accordance with the following first through fourth drive signals:

$$V_A = V_1 F(\omega_m t - \Phi_1)e^{j\omega t} \qquad \text{First RF drive signal} \qquad \text{Eq. 1a}$$

$$V_B = V_2 F(\omega_m t - \Phi_2)e^{j\omega t} \qquad \text{Second RF drive signal} \qquad \text{Eq. 1b}$$

$$V_C = V_3 F(\omega_m t - \Phi_3)e^{j\omega t} \qquad \text{Third RF drive signal} \qquad \text{Eq. 1c}$$

$$V_D = V_4 F(\omega_m t - \Phi_4)e^{j\omega t} \qquad \text{Fourth RF drive signal} \qquad \text{Eq. 1d}$$

where $t$ is time, $V_1$ through $V_4$ are zero-to-peak amplitudes, $j$ is the imaginary unit, the function $F$ is a complex function of its argument and is periodic with period $2\pi$, and where scalar value $\Phi_1$ is a first phase, scalar value $\Phi_2$ is a second phase that is shifted by 90 degrees ($\pi/2$ radians) relative to the first phase, scalar value $\Phi_3$ is a third phase that is shifted by 180 degrees ($\pi$ radians) relative to the first phase, scalar value $\Phi_4$ is a third phase that is shifted by 270 degrees ($3\pi/2$ radians) relative to the first phase, and scalar values $\omega$ and $\omega_m$ may be angular frequencies in radians per second, with $\omega > \omega_m$. It is understood that the applied voltage is described by the real part of any resulting complex expression. The same patent also provides a specific example of the implementation of the expressions in Eqs. 1a-1d in which the applied voltages are as follows:

$$V_A = V_0 cos(\omega_m t) cos(\omega t) \qquad \text{First RF drive signal} \qquad \text{Eq. 2a}$$

$$V_B = V_0 cos(\omega_m t - \pi/2) cos(\omega t) \qquad \text{Second RF drive signal} \qquad \text{Eq. 2b}$$

$$V_C = V_0 cos(\omega_m t - \pi) cos(\omega t) \qquad \text{Third RF drive signal} \qquad \text{Eq. 2c}$$

$$V_D = V_0 cos(\omega_m t - 3\pi/2) cos(\omega t) \qquad \text{Fourth RF drive signal} f_C \quad \text{Eq. 2d}$$

As noted above, the number of electrodes per subset is not limited to four electrodes per subset and may comprise any integer number, $N_e$, where $N_e \geq 3$. In such instances, the various electrodes, R, of each subset and the various voltage waveforms, $V(t)$, provided to the electrodes each subset may be enumerated, in order beginning with the electrode closest to the entrance inlet, by the index variable, $i$, as

$$R_1, R_2, ..., R_i, ..., R_{N_e} \qquad (3 \leq i \leq N_e)$$

and

$$V_1(t), V_2(t), ..., V_i(t), ..., V_{N_r}(t) \qquad (3 \leq i \leq N_e)$$

Then, each and every electrode denoted as $R_1$ will be provided with the same, identical waveform, $V_1(t)$. Likewise, each and every electrode denoted as $R_2$ will be provided with the same, identical waveform, $V_2(t)$, etc. According to some embodiments, the phase shifts, $\Delta\Phi$, between any two successive electrodes of a subset are constant across the subset and are given by

$$\Delta\Phi = 2\pi/N_e \qquad \text{Eq. 3}$$

However, in accordance with some other embodiments, the phase shifts are not necessarily uniform across each subset.

In accordance with some other embodiments of the present teachings, the RF voltage waveforms provided to the electrodes of the apparatus **100** may be selected as described in US Pat. No. 10,692,710, which describes creation of travelling waves by the provision of frequency-modulated waveforms that are driven by frequency-modulated signals, $S_{FM}$, signal represented by

$$S_{FM} = V_c cos(2\pi f_c + \beta S_{MS})$$

where $f_C$ is the "carrier frequency" (i.e., the frequency of the unmodulated conventional RF voltage waveform), $V_C$ is the voltage amplitude of the RF waveform, $\beta$ is a frequency modulation index and $S_{MS}$ is a frequency-modulating periodic waveform of frequency, $f_M$, which is a lower frequency than $f_C$. This latter patent provides a specific example in which the electrodes of a stacked-ring ion guide are organized into subsets of eight electrodes each and the phase of the frequency-modulating periodic waveform, $S_{MS}$, changes by $2\pi/8$ radians (45 degrees) between each pair of electrodes.

With reference, once again, to FIG. 2A, arrow **110** represents the migration direction of RF-generated pseudopotential wells (i.e., travelling waves) that may be generated as described above. As indicated by arrow **110,** the application of RF waveforms may be configured so that the travelling waves exert forces on ions that tends to urge the ions in the "forward" direction, which is generally from the ion inlet **113** towards the ion outlet **118**. However, in alternative embodiments, the direction of the pseudopotential well migration may be reversed, relative to the migration direction indicated in FIG. 2A, by reversing the phase relationships of applied drive waveforms within each subset of electrodes. FIG. 2A also shows that, in accordance with the present teachings, a static, uniform DC axial field is also generated that exerts a force on the ions that tends to oppose the force that is exerted by the pseudopotential well migration. A schematic example of the magnitude of a static uniform DC axial field is provided by plot **508** of FIG. 6A. Accordingly, the arrow **111** indicates the direction in which the same ions are urged to migrate by the applied static, uniform DC axial field. Thus, according to the operation shown in FIG. 2A, the DC axial field is applied so as to tend to urge ions in a "reverse" direction, from the ion outlet **118** towards the ion inlet **113**. It should be noted, however, that if the direction of the pseudopotential well migration is reversed from the direction shown in FIG. 2A, such that the travelling waves instead tend to urge the ions towards the ion inlet **113,** then the direction of the DC axial field is also reversed relative the direction shown in FIG. 2A, such that the so-reversed DC axial field urges ions towards the ion outlet **118.**

The DC axial field that is created within the ion occupation volume **101** may be generated, in known fashion, by dividing an end-to-end voltage difference across the length of the apparatus through the inclusion of a series of resistors between the electrical connections to the various electrodes **2.** Alternatively, the DC axial field may be generated by any one of a number of other known methods.

The opposed pseudopotential and DC axial field forces that are applied as shown in FIG. 2A create three different ion behavior conditions, as follows: (1) firstly, in the case of ions having the smallest $m/z$ values (e.g., the ions of ion packet **117a**), for which the force attributable to the RF travelling wave dominates over the DC-field force, the movement will be in the direction of the travelling wave, as indicated by motion vector **118a;** (2) in the case of ions having the greatest $m/z$ values (e.g., the ions of ion packet **117c**), for which the DC axial field dominates, the movement will be opposite to the direction of the travelling wave, as indicated by motion vector **118c**; and (3), finally, for ions having a particular critical $m/z$ value that depends on the applied voltages (e.g., the ions of ion packet **117b**), RF-derived and DC-gradient-derived forces will balance and such ions will not move in either direction. Thus, the apparatus **100,** when operated as indicated in FIG. 2A, performs simultaneously as: (a) a mass filter that permits only ions having relatively low-$m/z$ values (i.e., less than the critical value) to be transmitted along outlet stream **119** to a downstream apparatus (such as a quadrupole mass filter and/or a collision cell and/or a mass analyzer); (b) a single-mass-to-charge ion trap or ion accumulator for ions having the critical $m/z$ value; and (c) a filter that eliminates all ions having $m/z$ values that are greater than the critical value.

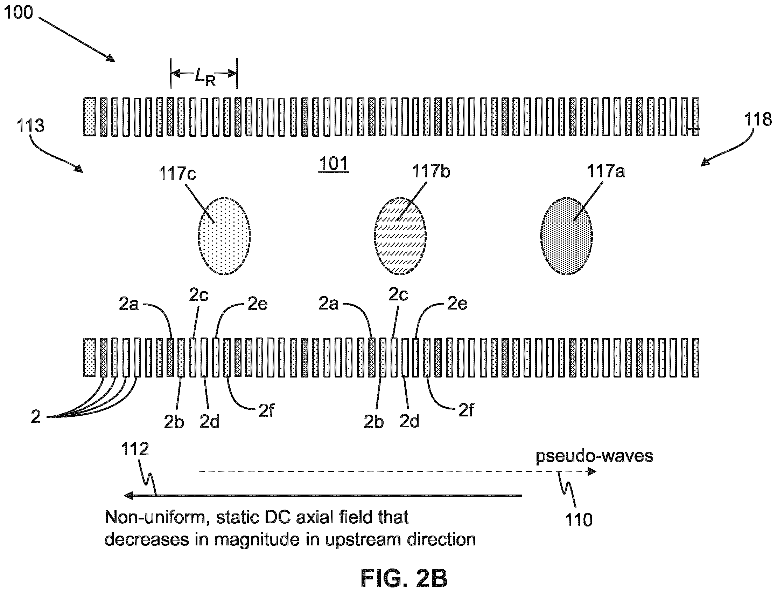

FIG. 2B is another schematic cross-sectional depiction of the ion tunnel stacked-ring ion guide **100,** as introduced in FIG. 2A, but configured and operated in an alternative mode that causes differential migration of ions through the ion guide as well as spatially separated trapping of ion species in accordance with their respective mass-to-charge ($m/z$) ratios. According to the mode of operation indicated in FIG. 2B, the applied static DC axial field that opposes the pseudopotential-derived travelling waves is not uniform but, instead, decreases in magnitude in a general direction from the ion outlet **118** towards the ion inlet **113.** Specifically, as indicated by arrow **112,** the DC axial field continues to generate forces that tend to urge ions in an "upstream" direction, opposite to the "downstream" direction (as indicated by arrow **110**) in which the ions are urged by the travelling waves. However, the magnitude of the DC axial field vector is non uniform and decreases in the upstream direction. Under such operation, various ion species within a range of $m/z$ values will be trapped within the ion occupation volume, as each such ion species migrates to and accumulates at an axial position at which the upstream-directed DC axial field exactly balances the downstream-directed pseudopotential-derived force that is exerted on ions of the species' mass-to-charge value. For example, in FIG. 2B, schematic axial equilibrium positions are indicated for a first packet of ions **117a** having mass-to-charge ratio $(m/z)_L$, a second packet of ions **117b** having mass-to-charge ratio $(m/z)_M$, and a third packet of ions **117c** having mass-to-charge ratio, $(m/z)_H$, where $(m/z)_H > (m/z)_M > (m/z)_L$. Although the equilibrium positions of only three packets of ions having specific m/z values are illustrated in FIG. 2B, there will generally exist, in practice, a virtually continuous range of equilibrium positions for ion having $m/z$ values within a certain $m/z$ range, with the equilibrium $m/z$ values decreasing in the general direction towards the ion outlet **118.** Additionally, certain ion species having small $m/z$ values that are outside of the range may migrate towards the ion outlet and certain other ion species having large $m/z$ values that are outside of the range may migrate towards the ion inlet. Accordingly, in the mode of operation that is schematically illustrated in FIG. 2B, the apparatus **100** functions as a multiple-mass-to charge ion-sorting ion trap.

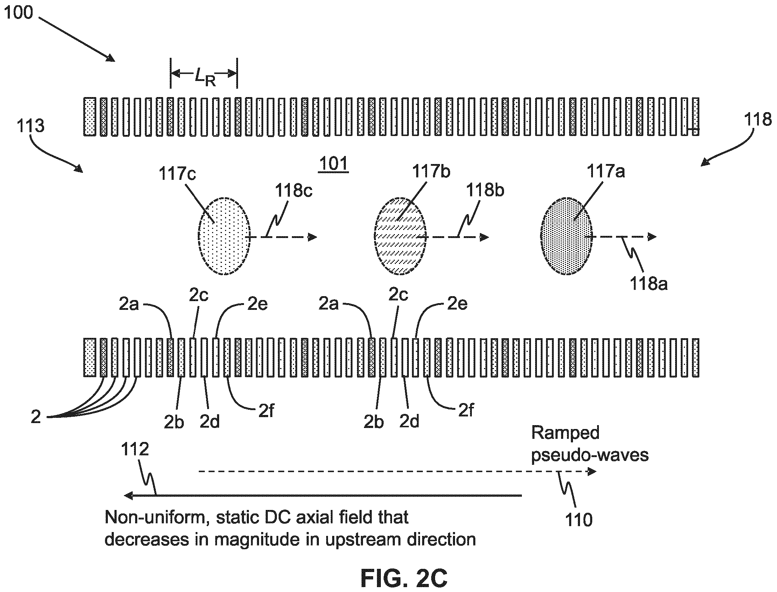

In order to extract the ions that are trapped at various equilibrium positions, as shown in FIG. 2B, the amplitude of the main RF voltage, either phase-shifted and/or frequency-modulated as described above, may be ramped upward (i.e., progressively increased) with time so that the equilibrium positions corresponding to all $m/z$ values migrate, over the course of the RF voltage amplitude ramping, towards the ion outlet, as indicated by the displacement vectors **118a, 118b** and **118c** in FIG. 2C. Additionally or alternatively, the magnitude of the opposing DC field may be ramped downward (i.e., progressively decreased). In this instance, trapped ions having the smallest $m/z$ values (e.g., the ions of packet **117a**) will be the first to pass out of the ion outlet and ions having the greatest $m/z$ values (e.g., the ions of packet **117c**) will exit last.

It should be noted that, in alternative embodiments, the migration direction of the travelling waves and the direction of the opposing DC field may be reversed from the directions shown in FIGS. 2A-2C. In such alternative embodiments, the ion species having the greatest $m/z$ values will be the first to be outlet from the apparatus, provided that the "direction" of ramping (i.e., either ramping "up" or ramping "down") of the RF amplitude (of travelling waves that urge ions towards the ion inlet **113**) and the "direction" of ramping of the magnitude of the DC field (that urge ions towards the ion outlet **118**) are also reversed. It should be further noted that, although many of the elementary examples discussed herein refer to ramping of either the RF amplitude or the DC field, more generally the RF amplitude and DC field may be ramped simultaneously, whereby, during the simultaneous ramping, the RF amplitude and the magnitude of the DC field either both increase or both decrease. In other instances, the simultaneous ramping may comprise an increase of the RF amplitude and a simultaneous decrease in the magnitude of the DC field. In still other instances, the simultaneous ramping may comprise a decrease in the RF amplitude and a simultaneous increase in the magnitude of the DC field.

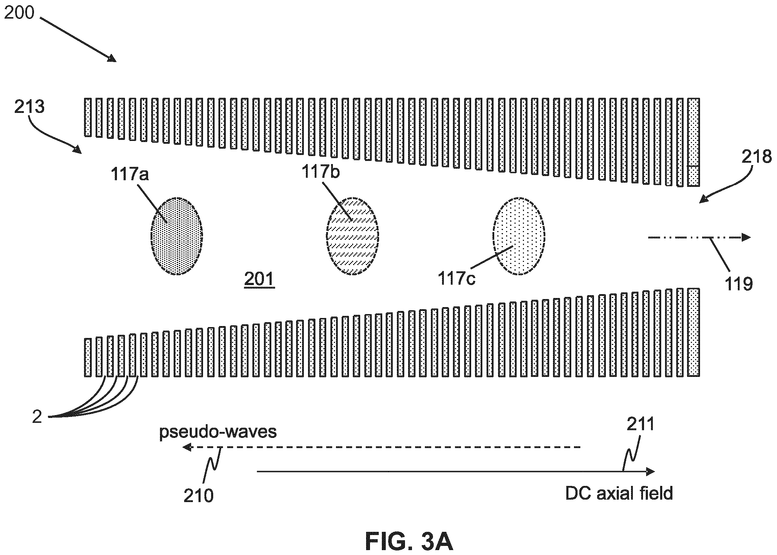

As described above, a stacked ring ion guide that is in the form of an ion tunnel may be made to function as either (a) a single-mass-to-charge ion trap or ion accumulator (as described with reference to FIG. 2A) by providing a uniform DC axial field in opposition to a travelling wave that is uniformly applied across the length of the apparatus or (b) a multiple-mass-to charge ion-sorting ion trap when there is a longitudinal spatial gradient in either the provided opposing DC field and/or the migrational motive force of the pseudo-wave. For an ion tunnel apparatus, the act of creating a "longitudinal spatial gradient in the migrational motive force of the pseudo-wave" requires providing different RF waveforms (e.g., different RF amplitudes) to the electrodes of the apparatus at various different positions between the ion inlet and the ion outlet. In such instances, the required electronics may be complex, expensive and/or difficult to design or fabricate. However, in the case of an ion funnel ion guide apparatus, such as the ion funnel apparatus **200** depicted in FIG. 3A, a gradient in the depth of pseudopotential wells - and, thereby, a gradient in the migrational motive force -is created by the geometry of the device. Specifically, within the ion funnel apparatus **200,** the depths of the various pseudopotential wells increase in the direction of convergence of the ion funnel (e.g., see FIG. 1 of US Pat. No. 9,799,503) essentially by virtue of the increasing proximity of electrode edges to the ion beam (centered near the device axis) in the same direction. Accordingly, with the direction of the RF-generated travelling waves directed (arrow **210**) so as to urge ions towards the ion inlet **213** and the DC field directed (arrow **211**) directed to urge ions towards the ion outlet **218,** the apparatus **200** may be operated as a multiple-mass-to charge ion-sorting ion trap without the application of any field gradients. Using the configuration shown in FIG. 3A, relatively "light" (small $m/z$) ions may be trapped within region **117a** proximal to the ion inlet **213** while, simultaneously, relatively "heavy" (large $m/z$) ions are trapped within region **117c** which is proximal to the ion outlet **218.** As noted previously, intermediate-$m/z$ ions are trapped within region **117b.** The trapped ions may be released, in reverse order of their $m/z$ ratios by either ramping up (i.e., to greater values) the magnitude of the DC field and/or ramping down (i.e., to lesser values) the applied RF amplitudes.

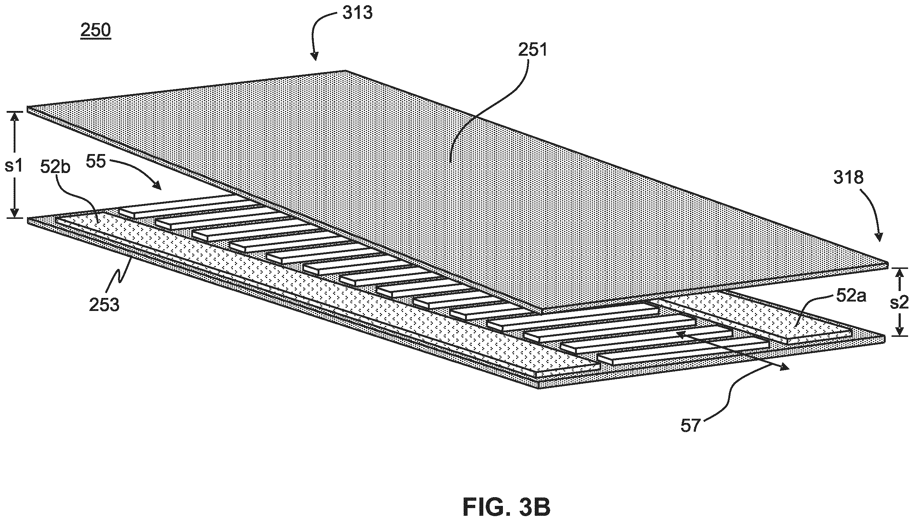

FIG. 3B is a modified version, in accordance with the present teachings, of the ion manipulation and ion guiding device of FIG. 1C. The ion manipulation and ion guiding device **250** that is depicted in FIG. 3B is modified, relative to the device **50** (FIG. 1C), in a fashion that enables it to be operated similarly to the operation, as discussed above, of the ion funnel **200** (FIG. 3A). In contrast to the device **50,** in which parallel plates or wafers **51** and **53** are configured to support the arrays **55** of inner electrodes as well as the sets of outer guard electrodes **52a, 52b,** the modified device **250** is configured such that the plates or wafers **251** and **253** converge towards one another along a direction away from an ion inlet **313** and towards an ion outlet **318.** For example, as shown in FIG. 3B, the plates/wafers **251** and **253** are separated from one another at the ion inlet **313** by a first separation distance, $s_1$, and are separated from one another at the ion outlet **318** by a second separation distance, $s_2$, where $s_1 > s_2$ and wherein there is a continuous convergence of the plates/wafers **251, 253** between the ion inlet **313** and the ion outlet **318.**

US patent 10,692,710 teaches that an RF travelling wave may be created along the axis **57** of the device **50** by the manipulation of main RF axial-confinement waveform(s) that are applied to the series of individual electrodes **7a, 7b, 7c,** ... of the mutually-facing electrode arrays **55** (see FIG. 1D). Additionally, the inventors of the present invention have subsequently recognized that a DC field that opposes the ion motion that is urged by the RF travelling waves may also be generated within either the device **50** (FIG. 1C) or the modified device **250** (FIG. 3B). For example, a static uniform DC field may be generated within either the device **50** or the modified device **250** by apportioning, among the plurality of inner electrodes of each plate/wafer **251, 253,** a DC potential difference that is imposed between the ion inlet **313** and the ion outlet **318.** The apportionment of the voltage difference may be achieved, in known fashion, by a voltage divider system. Additionally or alternatively, an axial DC field may be generated or an otherwise-generated axial field may be supplemented by providing the guard electrodes **52a, 52b** of each plate/wafer as composed of an electrically resistive material (as opposed to an electrically conductive material, such as a metal). For example, resistive guard electrodes **52a, 52b** may be formed of any one of a number of suitable materials (e.g., without limitation, doped glasses, cermets, polymers, etc.) having electrically resistive properties.

Because, within the device **250,** the electrodes of the two electrode arrays **55** (one electrode array supported on each of the plates/wafers **251, 253**) progressively approach one another along a direction from the ion inlet **313** towards the ion outlet **318,** there thus exists a gradient in the depth of pseudopotential wells, with the well depth increasing in the same direction. The increasing well depth creates a gradient in the migrational motive force that is provided by the RF-generated travelling waves. Accordingly, if the RF-generated travelling waves are configured to urge ions that are within the device **250** away from the ion outlet **318** and towards the ion inlet **313** and if the urging of the travelling waves is opposed by a static, uniform DC field that urges the ions towards the ion outlet **318,** then different ion species having different respective m/z values will establish different respective equilibrium positions within the device. In this situation, the distribution of equilibrium positions will be similar to the depiction in FIG. 3A, wherein ions **117a** having lesser mass-to-charge ratios are closer to the ion inlet than ions **117b, 117c** having greater mass-to-charge ratios and wherein ions having **117c** having the greatest mass-to-charge ratios are closest to the ion outlet. The trapped ions may then be released from the device **250,** in reverse order of their $m/z$ ratios by either ramping up (i.e., to greater values) the magnitude of the DC field and/or ramping down (i.e., to lesser values) the applied RF amplitudes.

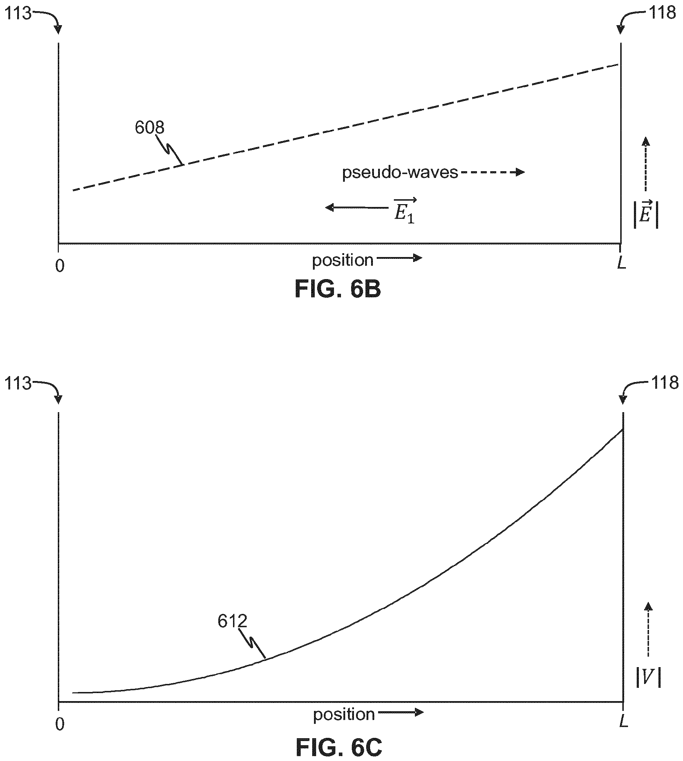

The following discussion relates to FIGS. 6A-6H, which are various schematic graphs of voltages and DC electric fields within an ion guide that is operated in accordance with the present teachings. With regard to each of these figures, it is assumed that an ion inlet **113,** at position 0, corresponds to the left-hand side of the respective graph and that an ion outlet **118,** at position $L$, corresponds to the right-hand side of the plot. It is also assumed that a set of pseudo-waves are applied to electrodes of the respective ion guide so as to urge ions away from the ion inlet and towards the ion outlet. It is to be noted that that absolute magnitude of applied DC voltage is plotted in each of FIGS. 6C and 6E. If positively charged ions are introduced into an ion guide or ion separator apparatus that is operated as described herein, then the general movement of ions within the apparatus will be as described if the applied DC voltage profiles are of the general form as the profiles shown in FIGS. 6C and 6E. However, if negatively charged ions are introduced into the apparatus, then the general movement of ions within the apparatus will be as described if the applied DC voltage profiles have the general form of mirror images (i.e., as reflected across the horizontal axis) of the profiles shown in FIGS. 6C and 6E.

As noted above, a uniform DC field may be applied in opposition to the motion of a set of travelling RF potential wells (i.e., a set of pseudo-waves) in order to isolate ions comprising a particular $m/z$ range within an ion guide (e.g., see FIG. 2A). For example, plot **508** of FIG. 6A depicts a uniform axial DC field as may be created by applying a series of DC voltages to the various individual electrodes of the ion guide wherein the applied voltages linearly increase from an ion inlet towards an ion outlet (i.e., plot **501** of FIG. 6A). As also noted above, a non-uniform axial DC field may be applied in opposition to the motion of the pseudo-waves to cause the ion guide to emit ions from its ion outlet in either increasing or decreasing order of the $m/z$ values (e.g., see FIG. 2C.

FIG. 6B schematically illustrates the variation of the absolute magnitude, $|\overrightarrow{E_1}|$, of an applied non-uniform axial electric field, $\overrightarrow{E_1}$, that urges ions towards an ion inlet **113** in which the absolute magnitude, $|\overrightarrow{E_1}|$, increases towards an ion outlet **118** that is located at position $L$. As shown schematically in FIG. 6C, the non-uniform axial field may be generated by applying a series of voltages to the various electrodes of the ion guide wherein the magnitude, $|V|$, of the applied voltages increases in accordance with a quadratic function from the ion inlet to the ion outlet, as shown by plot **612** of FIG. 6C. Although the magnitude of the field is shown as increasing linearly in FIG. 6B and the corresponding voltage profile in FIG. 6C is described as a quadratic function, the electric field magnitude may be non-linear and the voltage profile may not necessarily conform to a quadratic function.

The present inventors have determined, with regard to the utilization of an ion guide as an ion separation and sorting device (e.g., FIG. 2C) from which ions are emitted in the order of their $m/z$ values in accordance with the present teachings, that the mass spectral resolution, $R$, of the device may be optimized by utilizing a non-uniform electric field profile as is schematically depicted in FIG. 6D, which may be generated by applying DC voltages to electrodes in accordance with the voltage profile that is shown by segments **504a** and **504b** in FIG. 6E. Specifically, the inventors have determined that good mass spectral resolution may be achieved be employing an electric field profile (dashed lines in FIG. 6D) comprising a first segment **503a** and a second segment **503b,** wherein a magnitude, $|\overrightarrow{E_1}|$, of the DC axial field that opposes the ion motion caused by the pseudo-waves increases to a maximum value, $E_{max}$, within the first segment **503a** and remains constant at $E_{max}$ within the second segment **503b.** The corresponding profile of DC voltages that are applied to the electrodes (solid lines in FIG. 6E) comprises a quadratic section **504a** and a linear section **504b** (for comparison, dashed line **504** represents the extension of the purely quadratic profile). The position of the junction between segments **503a** and **503b** in FIG. 6D is denoted by point **pc** along the axial length of the apparatus and corresponds to the demarcation, denoted by line **505** in FIG. 6E between the quadratic and linear segments of the voltage profile.

Ions are introduced, via ion inlet **113,** into an ion guide apparatus that is capable of being configured with travelling RF voltages and static DC voltages as shown in FIGS 6D and 6E. The position of the ion inlet **113** is indicated as position 0 in FIGS. 6D and 6E. Radio Frequency (RF) voltage waveforms are applied to the electrodes of the apparatus to create a set of RF travelling waves that create pseudopotential wells that urge ions through the apparatus from the ion inlet **113** to an outlet **118,** which is located at position $L$. At the same time, DC voltages are applied to the electrodes that create an axial field that has the general form indicated by the dashed lines **503a, 503b** in FIG. 6D and that urges ions towards the ion inlet **113.** After introduction of the ions, the amplitude(s), $A_{RF}$, of the applied RF voltages is/are ramped (i.e., increased) with time. Under such conditions, as described previously herein, packets of ions having different respective $m/z$ values separate from one another and migrate through the apparatus towards the ion outlet **118** at different rates. FIG. 6D schematically depicts the positions, within the apparatus, of three packets of ions **517a, 517b, 517c** having mass-to-charge ratios $(m/z)_L$, $(m/z)_M$, and $(m/z)_H$, respectively, where $(m/z)_H > (m/z)_M > (m/z)_L$ at a particular time, $t_1$, during the ramping before any of the ions reach the plateau region **503b** of the DC field profile. The instantaneous position, at any particular time, of any such packet of ions at represents the axial location, within the apparatus, at which the instantaneous forward-directed urging of the ions of the packet by the pseudo-waves, as generated by the ramped RF amplitudes at the particular time, slightly overcomes the backward-directed urging of the ions by the static electric field along field segment **503a.** As discussed previously, these opposed forces cause the ions having the smallest $m/z$ values (e.g., ions of packet **517a**) to migrate towards the ion outlet the most rapidly and, thus, these ions arrive at point **p1** at time $t_1$. The ions having the greatest $m/z$ values (e.g., ions of packet **517c**) migrate the most slowly and, thus, only reach point **p3** at time $t_1$. At the same time, the ions having intermediate $m/z$ values (e.g., ions of packet **517b**) arrive at point **p2**.

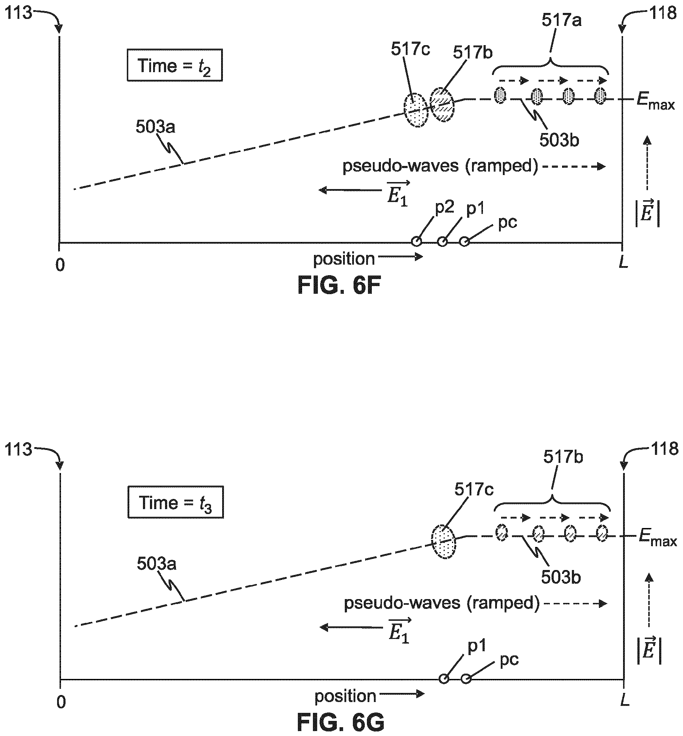

FIG. 6F is a schematic depiction of the positions of the packets of ions of FIG. 6D at a second time, $t_2$, subsequent to time $t_1$, at which the applied RF amplitude(s) has/have been ramped to such an extent that the forward-urging pseudopotential forces on the ions of ion packet **517a** first equal and then substantially exceed the maximum backward-urging electrostatic forces corresponding to $E_{max}$ along field-magnitude segment **503b.** As a result, multiple portions of the ions of packet **517a** are collected by individual travelling pseudopotential wells and are transported downstream thereby, conveyor-belt style, from position **pc** to the ion outlet **118** at position **L.** This movement of the ions along the flat field-strength profile **503b** is relatively rapid, in comparison to the migration along the ascending voltage profile **503a,** since additional ramping of the RF amplitude(s) is not met by a corresponding increase in the backward-urging DC field. Simulations of ion motions performed by the inventors indicate that although a portion of the ions of each ion packet may migrate in the reverse direction (i.e., towards the ion inlet **113**) within constant field region **503b,** they do so less frequently than within the variable field region **503a.** The ions are able to efficiently escape from the region **503a** in the vicinity of point **pc** because, on average, the travelling pseudopotential wells move them forward away from point **pc** and towards the ion outlet **118.**

At the same time that ions of packet **517a** are transported from position **pc** to position **L,** the ions of packets **517b** and **517c** remain at positions **p1** and **p2** that are upstream from position **pc** as a result of the earlier spatial separation of the various packets of ions. Since the forward-urging pseudopotential forces at these positions are merely sufficient to approximately balance (i.e., slightly exceed) the backward-urging DC field forces, the ions both of these packets continue to migrate relatively slowly towards position **pc** as the RF amplitude is further ramped until a subsequent time, $t_3$, at which packet **517b** reaches position **pc.** As shown in FIG. 6G, still further ramping of the RF amplitude(s) causes relatively rapid transport of the ions of the packet **517b** from position **pc** to position **L.** Yet additional ramping causes the ions of packet **517c** to be similarly transported (not shown).

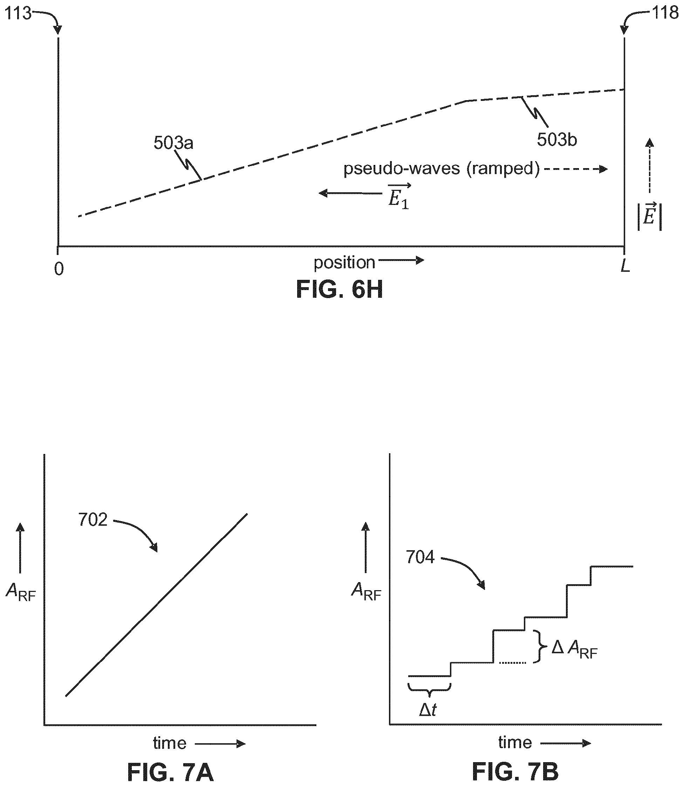

The transport of ions through an ion guide, in the fashion described above with reference to FIGS. 6G-6H, causes the emergence, from the ion outlet **118** of the apparatus, of ion packets having different respective *m/z* values to be spaced apart, in time, by at least the time of flight of the ions from position **pc** to the ion outlet **118.** The axial field profile that opposes the forward motion of the ions need not be exactly as shown in FIGS. 6D, 6F and 6G. For example, a voltage profile of the general form shown in FIG. 6H, wherein the profile along the second segment **503b** is not constant, may also be usefully employed. Simulations of ion motions and distributions performed by the inventors have shown that the exact form of the electric field in the "constant" region (i.e., the region indicated by voltage profile segment **503b**) is not critical. The simulations indicate that, although the best *m/z* resolution is achieved when the field within the profile segment **503b** is constant, small variations have only minor impacts on performance. Regardless, any gradient of the DC field in the profile segment **503b** should be less than the gradient of the DC field in the profile region **503a** that is used for initial spatial separation of ion species according to *m/z*.

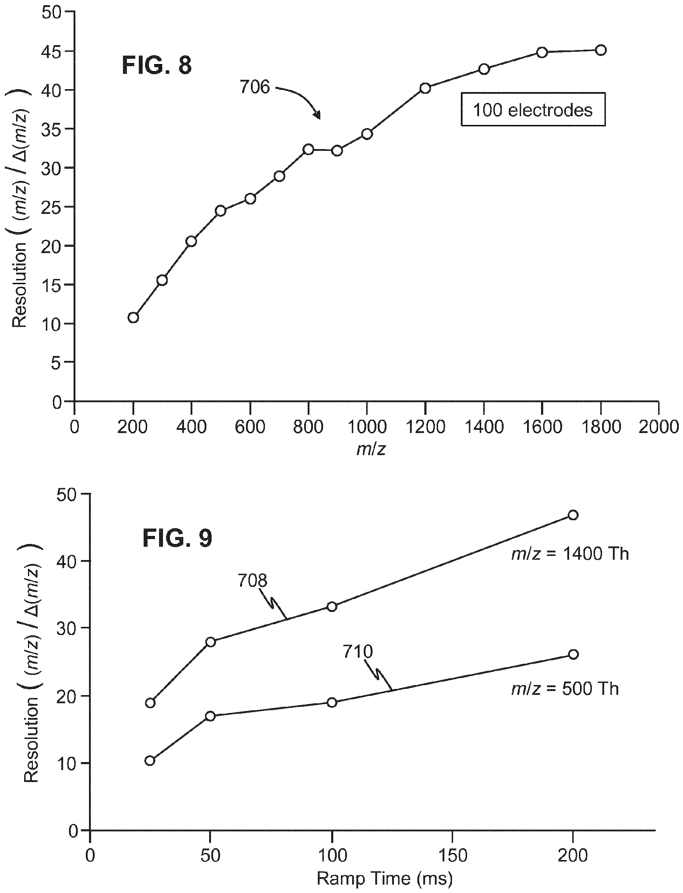

Further, the rate of ramping of the amplitude(s), $A_{RF}$, of the applied RF waveform(s) may be chosen depending on the requirements of a particular measurement. For example, if the ion guide apparatus is employed as a type of mass spectrometer that is operated in a general survey mode, with detection of all ions as they emerge from an ion outlet, then a continuous ramping of $A_{RF}$, as is schematically depicted in FIG. 7A, may be employed. Although FIG. 7A illustrates a linear variation of $A_{RF}$ with time, the variation may alternatively be non-linear, with steeper slopes (i.e., more rapid increase in amplitude) at those times during the ramping at which it is expected that the ions that emerge from the apparatus do not require detection at the maximum achievable resolution and shallower slopes (i.e., slower rate of increase of amplitude) at other times at which it is expected that the emerging ions require a greater level of *m/z* discrimination. For example, FIG. 8 shows the expected achievable mass spectral resolution of ions as a function of m/z at a constant RF ramp rate. FIG. 9 shows that greater resolution is expected with longer time durations allotted for completion of the ramping. FIG. 7B illustrates discontinuous, stepped ramping with, for example, longer dwell times, $\Delta t$, at times at which ions of particular interest are expected to emerge from the apparatus, and variable amplitude jumps, $\Delta A_{RF}$, at times at which no ions of interest are expected. Such expected times of emergence of ions of particular *m/z* values may be pre-determined by calibration of the transit times of known standard ions through the apparatus under various conditions.

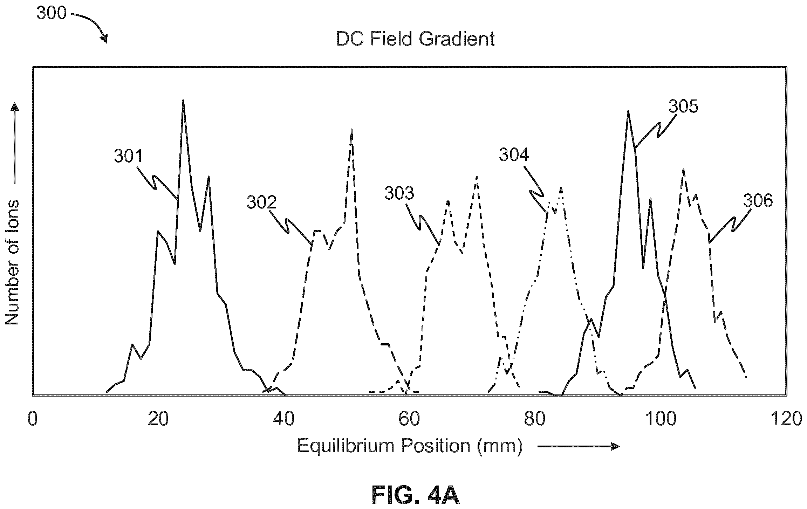

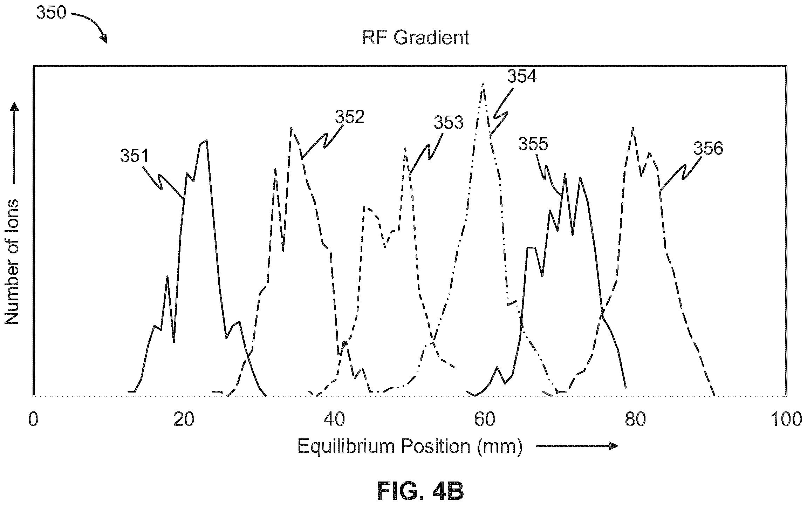

FIGS. 4A and 4B represent simulated performance of an ion sorting apparatus that is configured and operated in accordance with the present teachings. The simulated apparatus is 160 mm wide, having 320 electrodes, and 160 pseudopotential wells. The simulation assumed a general separation/equilibration time of 40 msec and assumed operation in the presence of 100 mTorr of nitrogen gas. The plots in FIG. 4A represent the equilibrium positions of ions of various *m/z* ratios within such an apparatus under the application of a DC axial field gradient while, at the same time, under the application of RF waveforms that do not vary across the length of the apparatus. In contrast, the plots in FIG. 4B represent the equilibrium positions of the same ions under application of an RF amplitude gradient across the length of the apparatus in the presence of a uniform DC axial field. Both trace **301** (FIG. 4A) and trace **351** (FIG. 4B) represent ions having a hypothetical *m/z* value of 500 Th. Similarly, traces **302** and **352** represent ions having *m/z* ratio of 600 Th; traces **303** and **353** represent ions having *m/z* ratio of 700 Th; traces **304** and **354** represent ions having *m/z* ratio of 800 Th; traces **305** and **352** represent ions having *m/z* ratio of 900 Th; and traces **306** and **356** represent ions having *m/z* ratio of 1000 Th.

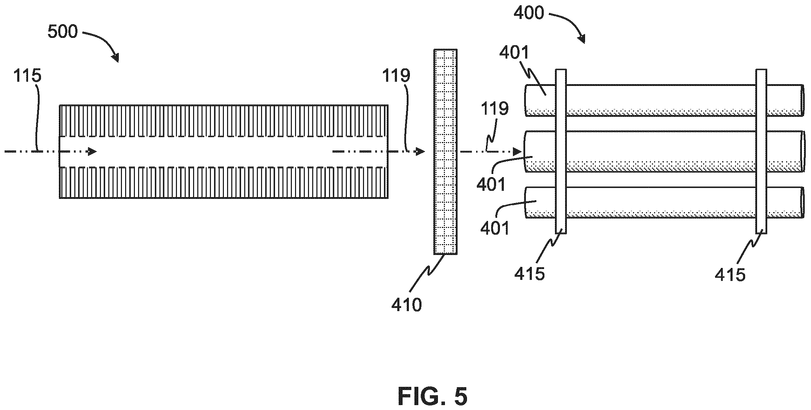

FIG. 5 is a schematic depiction of a portion of a mass spectrometer apparatus that includes an ion filter **400** or other mass spectrometer component arranged in series with an ion guide ion transport apparatus **500** that is configured in accordance with the above-described teachings. The apparatus **500** may comprise any of the embodiments that are illustrated in the accompanying drawings or may comprise any non-illustrated apparatus that is operated in accordance with the present teachings including but not limited to: ion guides comprising series of electrodes disposed on or otherwise adhered to parallel plates or wafers (e.g., FIGS. 1C, 1D), ion guides comprising series of electrodes disposed on or otherwise adhered to non-parallel plates or wafers (e.g., FIG. 3B), ion tunnels (e.g., FIGS. 2A-2C), ion funnels (e.g., FIG. 3A), ion guides having both ion tunnel and ion funnel portions in any number (e.g., FIGS. 1A-1B), ion guides in which the series of electrodes comprise series of segments of segmented quadrupole rods; and other ion guides that are capable of providing both an axial field gradient (either end-to-end or across only a portion of the length of the device) as well as a longitudinal gradient (either end-to-end or across only a portion of the length of the device) in RF amplitude or in some other RF parameter.

As illustrated, the apparatus **400** is a quadrupole mass filter that comprises four mutually parallel rod electrodes **401** that are maintained in mutual alignment by support structures **415** may also provide electrical connections to the rods. In other instances, the apparatus may comprise, without limitation, a multipole ion trap, a multipole fragmentation cell, an ion guide, or a mass analyzer of any type. Preferably, a controllable ion gate **410** is disposed between an ion outlet of the apparatus **500** and an ion inlet of the apparatus **400.**

In operation of the system depicted in FIG. 5, the apparatus **500** provides an outlet stream **119** of ions wherein, at any one time, the range of mass-to-charge ($m/z$) values of ions composing the outlet stream **119** is reduced relative to a broader range of $m/z$ values that are provided to an inlet end of the apparatus **500** within an inlet ion stream **115** and wherein the range of ($m/z$) values composing the outlet stream **119** changes, over time, to either greater $m/z$ values smaller $m/z$ values. In a practical sense, the operation of the apparatus **500** is thus similar to the operation of a conventional mass filter in which the mass-to-charge pass band of the mass filter is scanned with time with the exceptions that the pass band of the apparatus **500** is broader than that of a conventional mass filter and that ions within each pass band range may be accumulated and temporarily stored within the apparatus **500** prior to their release from the apparatus. Thus, the apparatus **500** performs the function of ion accumulation as well as the function of partial pre-separation of ions prior to transferring the ions into the conventional apparatus **400**. If the conventional apparatus **400** comprises a quadrupole mass filter, then such mass filter may isolate narrower $m/z$ ranges, each isolated range comprising ion species of particular analytical interest.

The ion outlet stream **119** may be either continuous in time or discontinuous in time. The continuity of delivery of the ion outlet stream to the apparatus **400** may be controlled by operation of an ion gate **410,** thereby restricting the $m/z$ range of ions that may be transferred to the downstream apparatus during any particular time interval. During the times that the ion gate **410** is closed (thereby restricting transmission), new packets of ions from the inlet ion stream **115** may be accumulated and sorted within the upstream apparatus **500** as described herein supra. At such times, the applied RF waveforms and DC voltages are coordinated so as to cause the sorting (e.g., FIG. 2B). At the time that the ion gate **410** is open, the internal RF waveforms and DC voltages are adjusted to permit migration of the accumulated ions out of the apparatus in either increasing order (e.g., FIG. 2C) or decreasing order (e.g., FIG. 3A) of their $m/z$ values.

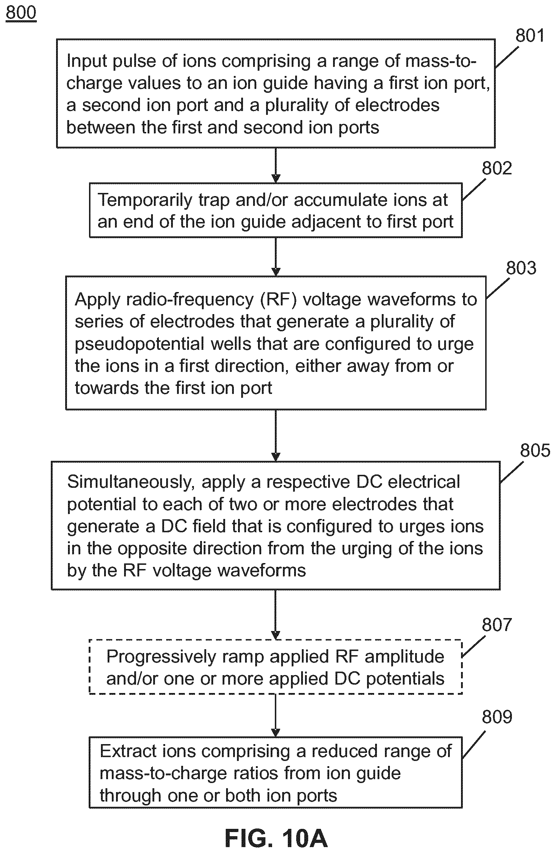

FIG. 10A is a flow diagram of a first method (method **800**) of operating an ion guide in accordance with the present teachings. In the first step, step **801** of the method **800,** a pulse of ions comprising a range of mass-to-charge ($m/z$) ratios are input to a first port of two separate ion ports of an ion guide. In step **802,** the ions are temporarily trapped and/or accumulated within the ion guide at an end of the ion guide that is adjacent to the first port. The ions may be trapped and/or accumulated thereat by applying DC voltages to electrodes near the first port that temporarily create a temporary, static potential well near that port. In the following step **803,** radio-frequency (RF) voltage waveforms that generate a plurality of pseudopotential wells that are configured to urge the ions in a first direction that is either away from the first ion port and towards the second ion port or, alternatively, towards the first ion port are applied to series of electrodes of the ion guide. In step **805,** which occurs simultaneously with step **803,** DC electrical potentials that generate a DC field that urges the ions in a direction that is opposite to the urging of the ions by the pseudopotential wells are applied to each of two or more respective electrodes. The DC field may either be uniform (i.e., constant magnitude that does not vary with position) or non-uniform (i.e., having magnitude that is variable with position) across the length of the ion guide. In optional step **807,** either the applied RF amplitude(s) and/or the one or more applied DC potentials are progressively ramped over time, in either an increasing or a decreasing fashion, in order to facilitate the differential migration of ions towards the second ion port. Finally, in step **809** ions comprising a range of $m/z$ ratios that is reduced relative to the range of $m/z$ ratios (i.e., is a subset of the range) of the originally input ions, are extracted from the second port of the ion guide. The extracted ions may be inlet to another component of a mass spectrometer apparatus, such as a mass filter, a collision cell or a mass analyzer.

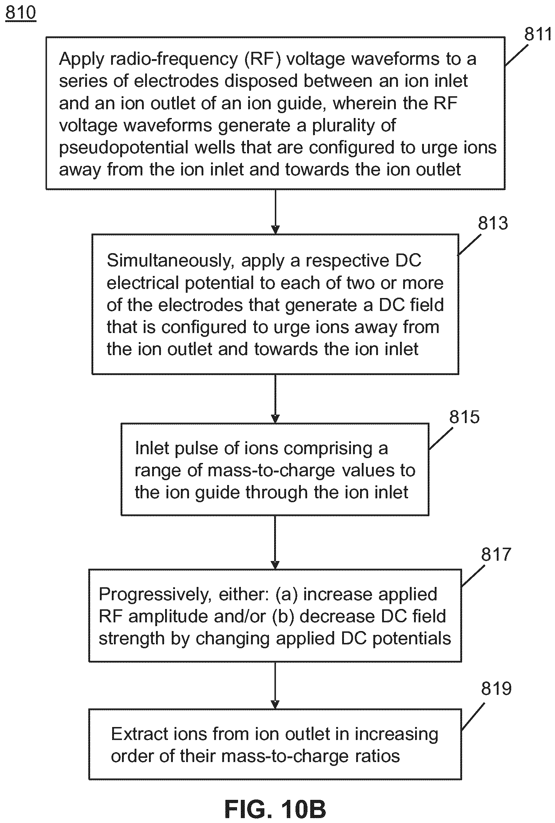

FIG. 10B is a flow diagram of a second method (method **810**) of operating an ion guide in accordance with the present teachings. In step **811** of the method **810,** radio-frequency (RF) voltage waveforms are applied to a series of electrodes disposed between an ion inlet and an ion outlet of an ion guide, wherein the RF voltage waveforms generate a plurality of pseudopotential wells that are configured to urge ions away from the ion inlet and towards the ion outlet. In step **813,** which is executed simultaneously with the execution of step **811,** respective DC electrical potentials are applied to each of two or more of the electrodes that generate a DC field that is configured to urge ions away from the ion outlet and towards the ion inlet. The DC field may either be uniform (i.e., constant magnitude that does not vary with position) or non-uniform (i.e., having magnitude that is variable with position) across the length of the ion guide. Subsequently, in step **815,** a pulse of ions comprising a range of mass-to-charge values is inlet to the ion guide through the ion inlet. In step **817,** either (a) the amplitude(s) of the applied RF waveforms are increased and/or (b) the magnitude of the applied DC field is progressively decreased to cause ions to differentially migrate through the ion guide and towards the ion outlet. In step **819,** the ions are extracted from the ion outlet in increasing order of their mass-to-charge ratios. The extracted ions may be inlet to another component of a mass spectrometer apparatus, such as a mass filter, a collision cell or a mass analyzer. According to a variation of the method **810,** the step **815** may be executed prior to the steps **811-813** and an additional step of trapping the pulse of ions within a region of the ion guide adjacent to the ion inlet may be executed prior to execution of the steps **811-813.**

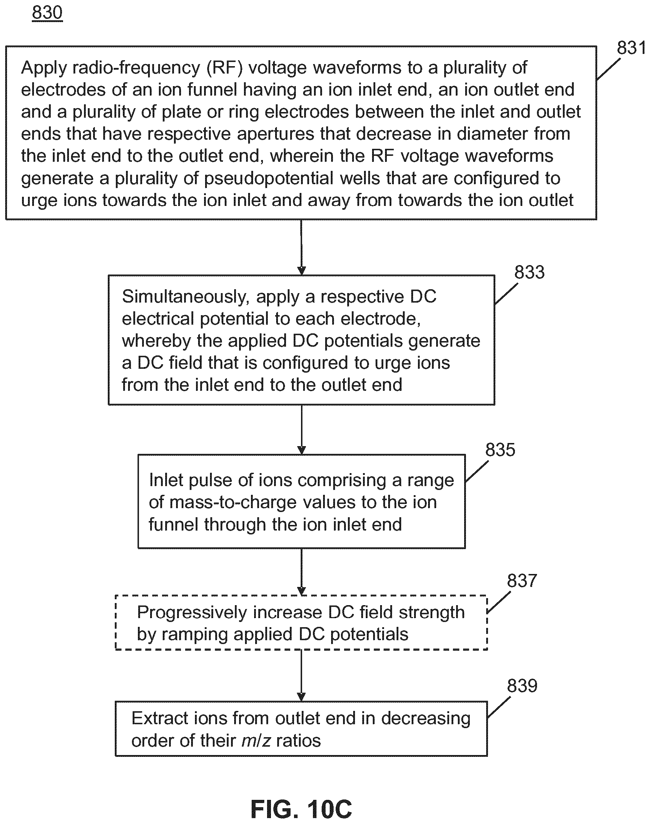

FIG. 10C is a flow diagram of a third method (method **830**) of operating an ion guide in accordance with the present teachings. In step **831,** radio-frequency (RF) voltage waveforms are applied to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from the ion outlet. In step **833,** which is executed simultaneously with the execution of step **831,** a respective DC electrical potential is applied to each of the electrodes, whereby the applied potentials generate a DC field that is configured to urge ions away from the inlet end towards the outlet end. Subsequently, in step **835,** a pulse of ions comprising a range of mass-to-charge values is inlet to the ion funnel through its ion inlet end. In optional step **837,** the magnitude (i.e., strength) of the DC field towards the ion outlet end of the ion funnel may be increased by ramping the DC voltages that are applied to the electrodes in order to facilitate the migration of ions towards the ion outlet end of the ion funnel. Finally, in step **839,** ions are extracted from the outlet end of the ion funnel in decreasing order of their $m/z$ ratios. The extracted ions may be inlet to another component of a mass spectrometer apparatus, such as a mass filter, a collision cell or a mass analyzer.

The discussion included in this application is intended to serve as a basic description. The present invention is not intended to be limited in scope by the specific embodiments described herein, which are intended as single illustrations of individual aspects of the invention. Functionally equivalent methods and components are within the scope of the invention, as defined by the claims. Various other modifications of the invention, in addition to those shown and described herein will become apparent to those skilled in the art. For example, a method of generating axial DC fields is described herein in which an end-to-end DC voltage is proportioned (e.g., by using voltage dividers) across a series or stack of electrodes to which RF voltages are also applied. However, many other means of generating axial fields within ion guides have been described, many of which utilize sets of auxiliary electrodes to generate axial fields. Such auxiliary electrodes are often separate from and in addition to a series or stack of main electrodes that receive the RF voltage waveforms. Many alternative methods for generating axial fields or drag fields are described in U.S. Pat. U.S. Pat. No. 7,675,031 (Konicek at al.); U.S. Pat. No. 5,847,386 (Thomson et al.); U.S. Pat. No. 7,985,951 (Okumura et al.; U.S. Pat. No. 7,064,322 (Crawford, et al.); U.S. Pat. No. 7,064,322 (Crawford, et al.); and U.S. Pat. No. 6,417,511 (Russ, IV, et al.). Adaptation of one or more of these known axial field generation techniques to the methods and apparatuses described herein is contemplated and would be within the ability of one of ordinary skill in the art.

As another example of a modification of the above teachings, a variation in the spacing between adjacent ring electrodes **2** (FIGS. 1A, 2A, 2B, 2C) or between adjacent electrodes of an array **55** that is supported on a substrate (FIG. 1C) may be used as an additional method for creating a longitudinal spatial gradient in the migrational motive force of an RF-derived travelling wave. For example, the interelectrode spacing could vary in either a continuous or a discontinuous fashion along the length of an axis of an ion guide or ion separator apparatus in accordance with the present teachings and this variation would create a corresponding variation in the depth of the pseudopotential wells along the length of the device.

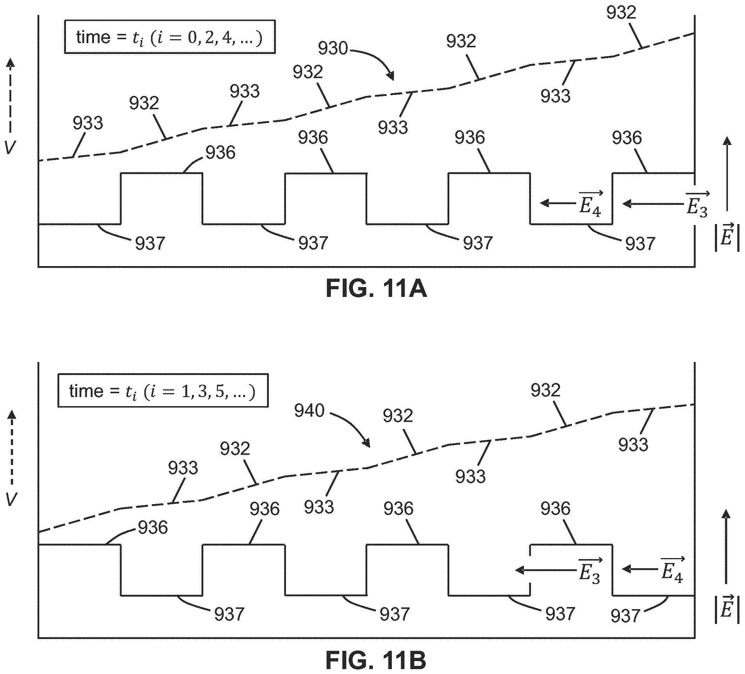

As still another example of a modification of the above teachings, the reader is directed to FIGS. 11A-11B. The hypothetical voltage plots that are depicted in FIGS. 11A-11B, when considered together, provide an example of the application, to an ion guide apparatus, of two separate DC voltage profiles **930, 940** that alternate in time with one another. The left end of each voltage profile corresponds to an ion inlet or "upstream" end of an ion guide apparatus and the right end of each profile corresponds to an ion outlet or "downstream" end of the apparatus. In operation, each DC profile is provided simultaneously with the providing of an RF-modulated travelling-wave that generates RF-induced pseudopotential wells that urge ions towards the downstream end of the apparatus to which the DC profiles are provided. The DC voltage profiles **930, 940** are provided in order to provide forces to ions that are in opposition to the pseudopotential-derived force and that thus urge ions towards the upstream end of the apparatus. Accordingly, the algebraic sign of the slope the profiles **930, 940** implicitly assumes that the ions are positively charged.

Each voltage profile in FIGS. 11A-11B comprises a series of steep-slope segments **932** separated from one another by a series of shallow-slope segments **933.** The terms "steep-slope" and "shallow-slope" are used herein in only a relative sense and do not imply any particular numerical values of slopes or of applied voltages. The steep-slope segments of the voltage profile correspond to an upstream-directed electric field vector $\vec{E_3}$ and the shallow-slope segments correspond to a second upstream-directed electric field vector, $\vec{E_4}$, where the vector magnitudes are such that $|\vec{E_4}| < |$

$\overrightarrow{E_3}|$. The voltage profile **930,** is applied at time periods, $t_i$, where $i$ = 0,2,4, ... and the voltage profile **940,** is applied at time periods where $i$ = 1,3,5, ... Each time the voltage profile changes, a section of the apparatus that was previously provided with the steep-slope profile is subsequently provided with the shallow-slope profile and vice versa.

It may be observed that the change from voltage profile **930** (FIG. 11A) to voltage profile **940** (FIG. 11B) and vice versa is equivalent to either a simple leftward or rightward shift of a single profile, with the shift being equal to the constant spatial width of the profile segments. However, with appropriate finer control of the apportioning of voltages provided to the various individual electrode segments that create the electric fields and to the cycling of the provided voltages to those electrodes, the shift may be caused to be much smaller than the segment widths. In such cases, the positional changes of voltage profiles as well as of the "peaks" **936** and "valleys" **937** of the profile of electric field magnitude may be made to more closely approximate a continuous profile shift and the positional changes of the peaks and valleys **936, 937** may be termed as a "DC travelling wave". The providing of such an upstream-migrating DC travelling wave in conjunction with the simultaneous providing of a downstream-migrating RF travelling wave may facilitate the separation and concentration, at an upstream end of an ion guide apparatus, of certain targeted "heavy" ion species if the rate of upstream migration of the peaks **936** is controlled so as to match the speed of movement of the target ions along the length of the apparatus. Generally, "light" ions will also migrate towards the downstream end of the apparatus under such conditions, but with less efficiency. Conversely, a downstream-migrating DC travelling wave may facilitate the separation of "light" ions and the concentration of those ions at the downstream end of the apparatus and/or their elimination from the apparatus at the ion outlet. Various operational parameters may be controlled as needed.

It should be noted that, with progressively increasing gas pressure above 0.01 Torr, the performance of an ion guide apparatus as described above will be progressively altered. Such changes are anticipated to result from the increasing probability of collisions between ions and gas molecules at increasing gas pressures. With slight increases in pressure above 0.01 Torr, the general characteristics of apparatus performance will continue to be as described above but there will be changes in $m/z$ resolution and in the speed at which ion species migrate through the apparatus. In general, although the greater gas pressure will counteract both the downstream-directed and upstream-directed urgings created by the applied voltages, the pressure effect will be greatest in regard to the RF travelling waves because of a reduction in the pseudopotential well depths with increasing gas pressure. As a result, as the internal pressure increases, the effects of the $m/z$ independent force that is exerted on all ions by the applied DC field will become more pronounced, relative to the urgings exerted by the RF travelling wave. Accordingly, at such gas pressures, the performance of an ion guide apparatus (e.g., $m/z$ resolution, ion residence time) as described above may be advantageously modified, depending on the requirements of a particular measurement, experiment or analytical program, by control of the gas pressure.

As the gas pressure inside an ion guide apparatus increases still further, the ion-molecule collisional effects will become increasingly pronounced, relative to the effects of the applied DC and RF voltages, such that, above some gas pressure that depends on apparatus configuration (e.g., length, cross-sectional area, gas composition, etc.), the collisional effects dominate over the $m/z$ dependent effects of the applied voltages and the apparatus performance tends to resemble an ion mobility separation apparatus, the performance of which is moderated by the applied DC and RF voltages. The performance of such an ion mobility apparatus may be advantageously modified, depending on the requirements of a particular measurement, experiment or analytical program, by controlling the magnitude or magnitudes of one or more applied RF voltage waveforms or by controlling one of more of the frequencies of the applied voltage waveforms.

Accordingly, gas pressure may be considered as an additional parameter to be taken into account during calibration of the performance of an apparatus that is operated as described by the present teachings. More generally, gas pressure is one of many operational parameters, such as apparatus length, apparatus cross-sectional area, gas composition, RF frequencies, etc., that may affect mass spectral results (e.g., mass spectral resolution and measurement speed) but that are difficult to theoretically model, when taken in combination. As a result, apparatus behavior should be calibrated for each particular apparatus prior to operation so that the effects of these parameters are well understood in each instance.

Still further, various embodiments of the present teachings may be described by one or more of the following clauses.

Clause 1. A method of operating an ion guide comprising a series of electrodes and first and second ends and having, therein, a gas at a pressure that is greater than or equal to 0.01 Torr, the method comprising:

applying a set of radio-frequency (RF) voltage waveforms to electrodes of the series that generate a plurality of moving pseudopotential wells that exert forces on ions within the ion guide that urge the ions to migrate from the first end to the second end of the ion guide; and
applying, simultaneously with the application of the set of RF voltage waveforms, a set of two or more direct-current (DC) electrical potentials either to electrodes of the series or to a set of auxiliary electrodes that generate forces on the ions within the ion guide that are independent of mass-to-charge ratio ($m/z$) and that urge the ions to migrate from the second end to the first end,
whereby there is caused one or more of $m/z$-dependent spatial separation, differential migration, or filtering of ions within the ion guide.

Clause 2. A method as recited in clause 1, wherein the $m/z$-dependent spatial separation, differential migration, or filtering of ions within the ion guide is controlled, in part, by controlling the gas pressure.

Clause 3. A method as recited in clause 1, wherein the ion guide is an ion mobility ion separation apparatus and wherein the $m/z$-dependent spatial separation, differential migration, or filtering of ions within the ion guide is controlled, in part, by controlling either a magnitude or a frequency of an applied RF voltage waveform.

Clause 4. A method as recited in clause 1, wherein the forces on the ions that are generated by the application of the two or more DC electrical potentials are generated by a dynamic DC field.

Clause 5. A method as recited in clause 4, wherein the dynamic DC field comprises a DC travelling wave.

Clause 6. A method as recited in clause 1, wherein the application of the two or more DC electrical fields generates a static DC field with the ion guide.

Clause 7. A method as recited in clause 6, wherein the first end of the ion guide is an ion inlet and the second end of the ion guide is an ion outlet and wherein the static DC field comprises:

a first segment adjacent to the first end wherein a magnitude of the DC field progressively increases along a direction away from the first end; and
a second segment adjacent to the second end wherein the magnitude of the DC field is greater than or equal to any magnitude of the DC field within the first segment.

Clause 8. A method as recited in clause 7, wherein, within the second segment, a variation of the magnitude of the DC field as a function of distance from the first end of the ion guide is substantially linear.

Clause 9. A method as recited in clause 1, wherein the applying of the set of RF voltage waveforms to electrodes of the series comprises applying the set of RF voltage waveforms to a series of ring electrodes.

Clause 10. A method as recited in clause 9, wherein the applying of the set of RF voltage waveforms to the series of ring electrodes comprises applying the set of RF voltages to ring electrodes of an ion tunnel apparatus.

Clause 11. A method as recited in clause 1, wherein the applying of the set of RF voltage waveforms to electrodes of the series comprises:

applying the set of RF voltage waveforms to a first series of electrodes disposed on a surface of a first substrate plate or wafer and to a second series of electrodes disposed on a surface of a second substrate plate or wafer, wherein the first substrate plate or wafer is substantially parallel to the second substrate plate or wafer and separated therefrom by a gap.

Clause 12. A method as recited in clause 1, wherein the applying of the two or more DC electrical potentials comprises applying electrical potentials that generate a static, uniform DC field within the ion guide, whereby ions having a particular mass-to-charge ratio, $(m/z)_M$, are caused to accumulate within the ion guide and ions having other mass-to-charge ratios are caused to migrate out of ion guide.

Clause 13. A method as recited in clause 12, further comprising:
ramping a magnitude of an applied DC electrical potential or an amplitude of an applied RF voltage waveform, whereby the accumulated ions having the particular mass-to-charge ratio, $(m/z)_M$, are caused to migrate out of the ion guide through either the first or second end.

Clause 14. A method as recited in clause 1, wherein the applying of the two or more DC electrical potentials comprises applying electrical potentials that generate a static, non-uniform DC field within the ion guide, whereby ions are caused to accumulate at a plurality of different locations within the ion guide, in accordance with their respective mass-to-charge ratio values.

Clause 15. A method as recited in clause 14, further comprising:
ramping a magnitude of an applied DC electrical potential or an amplitude of an applied RF voltage waveform, whereby the accumulated ions are caused to migrate out of the ion guide, in either ascending order or in reverse order of their respective mass-to-charge ratios, through either the first or second end.

Clause 16. A method as recited in clause 9, wherein:

the applying of the set of RF voltage waveforms to the series of ring electrodes comprises applying the set of RF voltages to ring electrodes of an ion funnel apparatus, wherein the first end is a wide end and the second end is a narrow end of the ion funnel apparatus; and
the applying of the two or more DC electrical potentials comprises applying electrical potentials that generate a static, uniform DC field within the ion guide that exerts forces on the ions that urge the ions towards the narrow end of the ion funnel apparatus,
whereby ions are caused to accumulate at a plurality of different locations within the ion guide, in accordance with their respective mass-to-charge ratio values.

Clause 17. A method as recited in clause 16, further comprising:
ramping a magnitude of an applied DC electrical potential or an amplitude of an applied RF voltage waveform, whereby the accumulated ions are caused to migrate out of the ion guide, in reverse order of their respective mass-to-charge ratios, through the narrow end of the ion funnel apparatus.

Clause 18. A mass spectrometer system comprising:

an ion source configured to generate a plurality of ions by ionization of a sample, the ions comprising a plurality of mass-to-charge ratio ($m/z$) values;
an ion guide having, therein, a gas at a pressure that is greater than or equal to 0.01 Torr and comprising:

an ion inlet configured to receive a stream of the ions from the ion source;
an ion outlet; and
a series of electrodes disposed between the ion inlet and the ion outlet, the series of electrodes defining an ion occupation volume and an axis of the ion guide between the ion inlet and the ion outlet; and

one or more power supplies electrically coupled to the series of electrodes, the one or more power supplies configured to:

apply a set of radio-frequency (RF) voltage waveforms to the series of electrodes that confine the ions within the ion occupation volume and that generate a plurality of moving pseudopotential wells that exert forces on the ions that urge the ions to migrate either from the inlet end to the outlet end or from the outlet end to the inlet end; and
apply, simultaneously with the application of the set of RF voltage waveforms, a set of direct-current (DC) electrical potentials to the series of electrodes or to two or more auxiliary electrodes that generate forces on the ions within the ion guide that are independent of mass-to-charge ratio ($m/z$) and that oppose the forces exerted by the moving pseudopotential wells.

Clause 19. A mass spectrometer system as recited in clause 18, wherein the one or more power supplies are configured to apply the set of DC electrical potentials so as to generate a dynamic DC field within the ion guide.

Clause 20. A mass spectrometer system as recited in clause 19, wherein the dynamic DC field comprises a DC travelling wave.

Clause 21. A mass spectrometer system as recited in clause 18, wherein the one or more power supplies are configured to apply the set of DC electrical potentials so as to generate a static DC field with the ion guide.

Clause 22. A mass spectrometer system as recited in clause 21, wherein the DC field generates forces on the ions that are configured to urge the ions towards the ion inlet and wherein the static DC field comprises:

a first segment adjacent to the first end wherein a magnitude of the DC field progressively increases along a direction away from the ion inlet and towards the ion outlet; and

a second segment adjacent to the second end wherein the magnitude of the DC field is greater than or equal to any magnitude of the DC field within the first segment.

Clause 23. A mass spectrometer system as recited in clause 22, wherein, within the second segment, a variation of the magnitude of the DC field as a function of distance from the first end of the ion guide is substantially linear.

Clause 24. A mass spectrometer system as recited in clause 18, wherein the series of electrodes comprises a series of ring electrodes of a stacked ring ion guide.

Clause 25. A mass spectrometer system as recited in clause 18, wherein the series of electrodes comprises:

a first series of electrodes disposed on a surface of a first substrate plate or wafer; and
a second series of electrodes disposed on a surface of a second substrate plate or wafer.

Clause 26. A mass spectrometer system as recited in clause 25, wherein the first substrate plate or wafer is substantially parallel to the second substrate plate or wafer and separated therefrom by a gap.

Clause 27. A mass spectrometer system as recited in clause 25, wherein the first substrate plate or wafer and the second substrate plate or wafer converge towards one another along a direction from the ion inlet towards the ion outlet.

Clause 28. A mass spectrometer system as recited in clause 18, wherein the one or more power supplies are further configured to apply the DC electrical potentials such that the generated DC field is a static uniform field, whereby ions having a particular mass-to-charge ratio, $(m/z)_M$, are caused to accumulate within the ion guide and ions having other mass-to-charge ratios are caused to migrate out of the ion guide.

Clause 29. A mass spectrometer system as recited in clause 28, wherein the one or more power supplies are further configured to change a magnitude of an applied DC electrical potential or an amplitude of an applied RF voltage waveform, whereby the accumulated ions having the particular mass-to-charge ratio, $(m/z)_M$, are caused to migrate out of the ion guide through the ion outlet.

Clause 30. A mass spectrometer system as recited in clause 18, wherein the one or more power supplies are further configured to apply the set of DC electrical potentials such that the generated DC field is a static, non-uniform field whereby ions are caused to accumulate at a plurality of different locations within the ion guide, in accordance with their respective mass-to-charge ratio values.

Clause 31. A mass spectrometer system as recited in clause 30, wherein the one or more power supplies are further configured to ramp a magnitude of an applied DC electrical potential or an amplitude of an applied RF voltage waveform, whereby the accumulated ions are caused to migrate out of the ion guide through the ion outlet, either in increasing order of their respective mass-to-charge ratios or in decreasing order of their respective mass-to-charge ratios.

Clause 32. A mass spectrometer system as recited in clause 18, further comprising a mass filter apparatus configured to receive ions transmitted out of the ion guide through its outlet end.

Clause 33. A mass spectrometer system as recited in clause 32, further comprising an ion gate disposed between the outlet end of the ion guide and the mass filter.

Clause 34. A mass spectrometer system as recited in clause 18 wherein an interelectrode spacing is non-constant between the ion inlet and the ion outlet.

## Claims

1. A method of operating an ion guide comprising a series of electrodes and first and second ends and having, therein, a gas at a pressure that is greater than or equal to 0.01 Torr, the method comprising:

applying a set of radio-frequency (RF) voltage waveforms to electrodes of the series that generate a plurality of moving pseudopotential wells that exert forces on ions within the ion guide that urge the ions to migrate from the first end to the second end of the ion guide; and

applying, simultaneously with the application of the set of RF voltage waveforms, a set of two or more direct-current (DC) electrical potentials either to electrodes of the series or to a set of auxiliary electrodes that generate forces on the ions within the ion guide that are independent of mass-to-charge ratio ($m/z$) and that urge the ions to migrate from the second end to the first end,

whereby there is caused one or more of $m/z$-dependent spatial separation, differential migration, or filtering of ions within the ion guide.

2. A method as recited in claim 1, wherein the ion guide is an ion mobility ion separation apparatus and wherein the $m/z$-dependent spatial separation, differential migration, or filtering of ions within the ion guide is controlled, in part, by controlling either a magnitude or a frequency of an applied RF voltage waveform or by controlling the gas pressure.

3. A method as recited in claim 1, wherein the forces on the ions that are generated by the application of the two or more DC electrical potentials are generated by a dynamic DC field that comprises a DC travelling wave.

4. A method as recited in claim 1, wherein the application of the two or more DC electrical potentials generates a static DC field within the ion guide and wherein the first end of the ion guide is an ion inlet and the second end of the ion guide is an ion outlet and wherein the static DC field comprises:

a first segment adjacent to the first end wherein a magnitude of the DC field progressively increases along a direction away from the first end; and

a second segment adjacent to the second end wherein the magnitude of the DC field is greater than or equal to any magnitude of the DC field within the first segment,

wherein, within the second segment, a variation of the magnitude of the DC field as a function of distance from the first end of the ion guide is substantially linear.

5. A method as recited in claim 1, wherein the applying of the set of RF voltage waveforms to electrodes of the series comprises applying the set of RF voltage waveforms to a series of ring electrodes that comprises ring electrodes of an ion tunnel apparatus.

6. A method as recited in claim 1, wherein the applying of the two or more DC electrical potentials comprises applying electrical potentials that generate either:

a static uniform DC field that causes ions having a particular mass-to-charge ratio, $(m/z)_M$, to accumulate within the ion guide and causes ions having other mass-to-charge ratios to migrate out the of ion guide, or

a static non-uniform DC field that causes ions to accumulate at a plurality of different locations within the ion guide, in accordance with their respective mass-to-charge ratio values.

7. A method as recited in claim 6, further comprising:
ramping a magnitude of an applied DC electrical potential or an amplitude of an applied RF voltage waveform, whereby the accumulated ions are caused to migrate out of the ion guide through either the first or second end.

8. A method as recited in claim 1, wherein:

the applying of the set of RF voltage waveforms to electrodes of the series comprises applying the set of RF voltages to ring electrodes of an ion funnel apparatus, wherein the first end is a wide end and the second end is a narrow end of the ion funnel apparatus; and

the applying of the two or more DC electrical potentials comprises applying electrical potentials that generate a static, uniform DC field within the ion guide that exerts forces on the ions that urge the ions towards the narrow end of the ion funnel apparatus,

whereby ions are caused to accumulate at a plurality of different locations within the ion guide, in accordance with their respective mass-to-charge ratio values.

9. A method as recited in claim 8, further comprising:
ramping a magnitude of an applied DC electrical potential or an amplitude of an applied RF voltage waveform, whereby the accumulated ions are caused to migrate out of the ion guide, in reverse order of their respective mass-to-charge ratios, through the narrow end of the ion funnel apparatus.

**10.** A mass spectrometer system comprising:

an ion source configured to generate a plurality of ions by ionization of a sample, the ions comprising a plurality of mass-to-charge ratio (m/z) values;

an ion guide having, therein, a gas at a pressure that is greater than or equal to 0.01 Torr and comprising:

an ion inlet configured to receive a stream of the ions from the ion source;
an ion outlet; and
a series of electrodes disposed between the ion inlet and the ion outlet, the series of electrodes defining an ion occupation volume and an axis of the ion guide between the ion inlet and the ion outlet; and

one or more power supplies electrically coupled to the series of electrodes, the one or more power supplies configured to:

apply a set of radio-frequency (RF) voltage waveforms to the series of electrodes that confine the ions within the ion occupation volume and that generate a plurality of moving pseudopotential wells that exert forces on the ions that urge the ions to migrate either from the inlet end to the outlet end or from the outlet end to the inlet end; and

apply, simultaneously with the application of the set of RF voltage waveforms, a set of direct-current (DC) electrical potentials to the series of electrodes or to two or more auxiliary electrodes that generate forces on the ions within the ion guide that are independent of mass-to-charge ratio (m/z) and that oppose the forces exerted by the moving pseudopotential wells.

**11.** A mass spectrometer system as recited in claim 10, wherein the one or more power supplies are configured to apply the set of DC electrical potentials so as to generate a dynamic DC field within the ion guide and wherein the dynamic DC field comprises a DC travelling wave.

**12.** A mass spectrometer system as recited in claim 10, wherein the one or more power supplies are configured to apply the set of DC electrical potentials so as to generate a static DC field with the ion guide wherein the static DC field generates forces on the ions that are configured to urge the ions towards the ion inlet and wherein the static DC field comprises:

a first segment adjacent to the first end wherein a magnitude of the DC field progressively increases along a direction away from the ion inlet and towards the ion outlet; and
a second segment adjacent to the second end wherein the magnitude of the DC field is greater than or equal to any magnitude of the DC field within the first segment,
wherein, within the second segment, a variation of the magnitude of the DC field as a function of distance from the first end of the ion guide is substantially linear.

**13.** A mass spectrometer system as recited in claim 10, wherein the series of electrodes comprises:

a first series of electrodes disposed on a surface of a first substrate plate or wafer; and
a second series of electrodes disposed on a surface of a second substrate plate or wafer, wherein the second substrate plate or wafer is separated from the first substrate by a gap.

**14.** A mass spectrometer system as recited in 13, wherein the first substrate plate or wafer and the second substrate plate or wafer converge towards one another along a direction from the ion inlet towards the ion outlet.

**15.** A mass spectrometer system as recited in claim 10, wherein the one or more power supplies are further configured to apply the DC electrical potentials such that the generated DC field is either:

a static uniform DC field that causes ions having a particular mass-to-charge ratio, $(m/z)_M$, to accumulate within the ion guide and that causes ions having other mass-to-charge ratios to migrate out of the ion guide, or
a static non-uniform DC field that causes ions to accumulate at a plurality of different locations within the ion guide, in accordance with their respective mass-to-charge ratio values.

**16.** A mass spectrometer system as recited in claim 15, wherein the one or more power supplies are further configured to change a magnitude of an applied DC electrical potential or an amplitude of an applied RF voltage waveform, whereby the accumulated ions are caused to migrate out of the ion guide through the ion outlet.

17. A mass spectrometer system as recited in claim 10 wherein an inter-electrode spacing is non-constant between the ion inlet and the ion outlet.

FIG. 1A
(Prior Art)

FIG. 1B
(Prior Art)

**FIG. 1C
(Prior Art)**

EP 4 513 528 A1

**FIG. 1D**
**(Prior Art)**

**FIG. 2A**

**FIG. 2B**

EP 4 513 528 A1

FIG. 2C

Ramped pseudo-waves

Non-uniform, static DC axial field that decreases in magnitude in upstream direction

EP 4 513 528 A1

200

213

117a    117b

218

117c

201

119

2

pseudo-waves

210    211

DC axial field

FIG. 3A

FIG. 3B

**FIG. 4A**

EP 4 513 528 A1

**FIG. 4B**

FIG. 5

FIG. 6A

EP 4 513 528 A1

113

118

608

pseudo-waves - - - - - - ➤

$\longleftarrow \quad \overrightarrow{E_1}$

$|\vec{E}|$

0                    position ⟶                    L

**FIG. 6B**

113

118

612

$|V|$

0                    position ⟶                    L

**FIG. 6C**

FIG. 6D

FIG. 6E

38

113

Time = $t_2$

517c    517b

517a

118

$E_{max}$

503a

pseudo-waves (ramped) - - - - - →

$\overrightarrow{E_1}$

503b

p2  p1

pc

$|\vec{E}|$

0

position →

L

**FIG. 6F**

113

Time = $t_3$

517b

517c

118

$E_{max}$

503a

pseudo-waves (ramped) - - - - - →

$\overrightarrow{E_1}$

503b

p1

pc

$|\vec{E}|$

0

position →

L

**FIG. 6G**

**FIG. 6H**

**FIG. 7A**

**FIG. 7B**

FIG. 8

FIG. 9

800

Input pulse of ions comprising a range of mass-to-charge values to an ion guide having a first ion port, a second ion port and a plurality of electrodes between the first and second ion ports | 801

Temporarily trap and/or accumulate ions at an end of the ion guide adjacent to first port | 802

Apply radio-frequency (RF) voltage waveforms to series of electrodes that generate a plurality of pseudopotential wells that are configured to urge the ions in a first direction, either away from or towards the first ion port | 803

Simultaneously, apply a respective DC electrical potential to each of two or more electrodes that generate a DC field that is configured to urges ions in the opposite direction from the urging of the ions by the RF voltage waveforms | 805

Progressively ramp applied RF amplitude and/or one or more applied DC potentials | 807

Extract ions comprising a reduced range of mass-to-charge ratios from ion guide through one or both ion ports | 809

FIG. 10A

810

Apply radio-frequency (RF) voltage waveforms to a series of electrodes disposed between an ion inlet and an ion outlet of an ion guide, wherein the RF voltage waveforms generate a plurality of pseudopotential wells that are configured to urge ions away from the ion inlet and towards the ion outlet

811

Simultaneously, apply a respective DC electrical potential to each of two or more of the electrodes that generate a DC field that is configured to urge ions away from the ion outlet and towards the ion inlet

813

Inlet pulse of ions comprising a range of mass-to-charge values to the ion guide through the ion inlet

815

Progressively, either: (a) increase applied RF amplitude and/or (b) decrease DC field strength by changing applied DC potentials

817

Extract ions from ion outlet in increasing order of their mass-to-charge ratios

819

## FIG. 10B

830

Apply radio-frequency (RF) voltage waveforms to a plurality of electrodes of an ion funnel having an ion inlet end, an ion outlet end and a plurality of plate or ring electrodes between the inlet and outlet ends that have respective apertures that decrease in diameter from the inlet end to the outlet end, wherein the RF voltage waveforms generate a plurality of pseudopotential wells that are configured to urge ions towards the ion inlet and away from towards the ion outlet — 831

Simultaneously, apply a respective DC electrical potential to each electrode, whereby the applied DC potentials generate a DC field that is configured to urge ions from the inlet end to the outlet end — 833

Inlet pulse of ions comprising a range of mass-to-charge values to the ion funnel through the ion inlet end — 835

Progressively increase DC field strength by ramping applied DC potentials — 837

Extract ions from outlet end in decreasing order of their $m/z$ ratios — 839

**FIG. 10C**

time = $t_i$ $(i = 0, 2, 4, ...)$

FIG. 11A

time = $t_i$ $(i = 1, 3, 5, ...)$

FIG. 11B

EP 4 513 528 A1

Europäisches
Patentamt
European
Patent Office
Office européen
des brevets

# EUROPEAN SEARCH REPORT

**Application Number**

EP 24 19 4884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/291167 A1 (HOYES JOHN BRIAN [GB]) 15 September 2022 (2022-09-15) | 1,2, 4-10, 12-17 | INV. H01J49/06 G01N27/623 |
| Y | * figures 2-4 * <br> * claim 20 * <br> * paragraphs [0003], [0009], [0024] - [0050], [0083] - [0087], [0105] * <br> - - - - - | 3,11 | |
| Y | US 2015/294848 A1 (GREEN MARTIN RAYMOND [GB] ET AL) 15 October 2015 (2015-10-15) <br> * paragraphs [0257] - [0258] * <br> - - - - - | 3,11 | |
| A | US 2020/321190 A1 (IBRAHIM YEHIA M [US] ET AL) 8 October 2020 (2020-10-08) <br> * figure 1A * <br> * paragraph [0029] * <br> - - - - - | 13,14 | |
| A | US 2016/211128 A1 (WILLIAMS JR PETER T [US] ET AL) 21 July 2016 (2016-07-21) <br> * paragraph [0052] * <br> - - - - - | 2 | |
| A | US 2013/299690 A1 (SHVARTSBURG ALEXANDRE A [US] ET AL) 14 November 2013 (2013-11-14) <br> * figures 1-3 * <br> * paragraphs [0011], [0026] - [0032] * <br> - - - - - | 1-17 | **TECHNICAL FIELDS SEARCHED (IPC)** <br><br> H01J <br> G01N |

The present search report has been drawn up for all claims

| Place of search | Date of completion of the search | Examiner |
|---|---|---|
| The Hague | 15 January 2025 | Simpson, Malcolm |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 4884

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2025

| Patent document cited in search report | | Publication date | Patent family member(s) | | Publication date |
|---|---|---|---|---|---|
| US 2022291167 | A1 | 15-09-2022 | CN | 114342041 A | 12-04-2022 |
| | | | EP | 4031858 A1 | 27-07-2022 |
| | | | GB | 2588846 A | 12-05-2021 |
| | | | US | 2022291167 A1 | 15-09-2022 |
| | | | WO | 2021053342 A1 | 25-03-2021 |
| US 2015294848 | A1 | 15-10-2015 | CA | 2829828 A1 | 20-09-2012 |
| | | | EP | 2686869 A2 | 22-01-2014 |
| | | | GB | 2489310 A | 26-09-2012 |
| | | | JP | 5623663 B2 | 12-11-2014 |
| | | | JP | 2014509743 A | 21-04-2014 |
| | | | US | 2014124663 A1 | 08-05-2014 |
| | | | US | 2015028200 A1 | 29-01-2015 |
| | | | US | 2015294848 A1 | 15-10-2015 |
| | | | WO | 2012123730 A2 | 20-09-2012 |
| US 2020321190 | A1 | 08-10-2020 | CA | 3085929 A1 | 27-06-2019 |
| | | | CN | 111587470 A | 25-08-2020 |
| | | | EP | 3729489 A1 | 28-10-2020 |
| | | | JP | 2021507478 A | 22-02-2021 |
| | | | SG | 11202005691V A | 29-07-2020 |
| | | | US | 2019189393 A1 | 20-06-2019 |
| | | | US | 2020321190 A1 | 08-10-2020 |
| | | | WO | 2019125891 A1 | 27-06-2019 |
| US 2016211128 | A1 | 21-07-2016 | CN | 105810550 A | 27-07-2016 |
| | | | EP | 3048636 A1 | 27-07-2016 |
| | | | US | 2016211128 A1 | 21-07-2016 |
| US 2013299690 | A1 | 14-11-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6630662 B, Loboda
- US 7838826 B1, Park
- US 11226308 B, Rather and Michelmann
- US 6812453 B, Bateman
- US 9799503 B, Williams
- US 10692710 B, Prabhakaran

- US 7675031 B, Konicek
- US 5847386 A, Thomson
- US 7985951 B, Okumura
- US 7064322 B, Crawford
- US 6417511 B, Russ, IV

**Non-patent literature cited in the description**

- **KANU ; ABU B. ; PRABHA DWIVEDI ; MAGGIE TAM ; LAURA MATZ ; HERBERT H. HILL JR.** Ion mobility-mass spectrometry. *Journal of mass spectrometry*, 2008, vol. 43 (1), 1-22
- **MICHELMANN ; KARSTEN ; JOSHUA A. SILVEIRA ; MARK E. RIDGEWAY ; MELVIN A. PARK**. Fundamentals of trapped ion mobility spectrometry. *Journal of the American Society for Mass Spectrometry*, 2014, vol. 26 (1), 14-24
- **SILVEIRA ; JOSHUA A. ; KARSTEN MICHELMANN ; MARK E. RIDGEWAY ; MELVIN A. PARK**. Fundamentals of trapped ion mobility spectrometry part II: fluid dynamics. *Journal of the American Society for Mass Spectrometry*, 2016, vol. 27 (4), 585-595

- **TOLMACHEV ; ALEKSEY V. ; IAN K. WEBB ; YEHIA M. IBRAHIM ; SANDILYA VB GARIMELLA ; XINYU ZHANG ; GORDON A. ANDERSON ; RICHARD D. SMITH**. Characterization of ion dynamics in structures for lossless ion manipulations. *Analytical chemistry*, 2014, vol. 86 (18), 9162-9168
- **IBRAHIM ; YEHIA M. ; AHMED M. HAMID ; LIULIN DENG ; SANDILYA VB GARIMELLA ; IAN K. WEBB ; ERIN S. BAKER ; RICHARD D. SMITH**. New frontiers for mass spectrometry based upon structures for lossless ion manipulations. *Analyst*, 2017, vol. 142 (7), 1010-1021